(19) Europäisches Patentamt
European Patent Office
Office européen des brevets

(11) **EP 4 509 477 A1**

(12) **EUROPEAN PATENT APPLICATION**
published in accordance with Art. 153(4) EPC

(43) Date of publication:
**19.02.2025  Bulletin 2025/08**

(21) Application number: **23788431.7**

(22) Date of filing: **14.04.2023**

(51) International Patent Classification (IPC):
***C03C 27/12*** (2006.01)    ***B60J 1/02*** (2006.01)

(52) Cooperative Patent Classification (CPC):
**B32B 17/00; B60J 1/02**

(86) International application number:
**PCT/JP2023/015241**

(87) International publication number:
**WO 2023/200014 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **15.04.2022   JP 2022067714**

(71) Applicant: **Sekisui Chemical Co., Ltd.
Osaka 530-8565 (JP)**

(72) Inventor: **ISHIDA, Jun
6045 JB  Roermond (NL)**

(74) Representative: **Ter Meer Steinmeister & Partner
Patentanwälte mbB
Nymphenburger Straße 4
80335 München (DE)**

(54) **INTERLAYER FILM FOR LAMINATED GLASS AND METHOD FOR MANUFACTURING SAME
AND LAMINATED GLASS AND METHOD FOR MANUFACTURING SAME**

(57)    Provided is an interlayer film for laminated glass capable of suppressing generation of double images, and suppressing unevenness in heat shielding performance in laminated glass. The interlayer film for laminated glass according to the present invention has a region where a partial wedge angle in a length of 400 mm in the direction connecting one end and the other end of the interlayer film is 0.05 mrad or more, the interlayer film includes a heat shielding layer containing a heat shielding substance and having a glass transition point of 15°C or more, and when a distance between the one end and the other end or the interlayer film is referred to as **X,** the thickness of the interlayer film at an arbitrary position (1) of the interlayer film within a region of 0.1X to 0.9X from the one end toward the other end, the thickness of the interlayer film at a position (2) where the thickness of the interlayer film is smaller than the thickness of the interlayer film at the position (1) by 25 $\mu$m or more, the solar transmittance at the position (1) of the laminated glass including the interlayer film, and the solar transmittance at the position (2) of the laminated glass including the interlayer film satisfy specific relationships.

[FIG. 1]

EP 4 509 477 A1

## Description

### TECHNICAL FIELD

The present invention relates to an interlayer film for laminated glass that is used for obtaining laminated glass, and a method for producing the same. Also, the present invention relates to a laminated glass and a method for producing the same.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

Moreover, as the laminated glass used for automobiles, a head-up display (HUD) has been known. In a HUD, it is possible to display measured information including automobile traveling data such as speed on the windshield of the automobile, and the driver can recognize as if the display were shown in front of the windshield. In the HUD, however, there is a problem that the measured information or the like is doubly observed. In order to suppress double images, a wedge-like interlayer film has been used.

Also, high heat shielding properties are required for a laminated glass used in vehicles and buildings. For example, in the following Patent Document 1, a wedge-like interlayer film containing a heat shielding compound is disclosed.

### Related Art Document

### Patent Document

Patent Document 1: WO2018/081570 A1

### SUMMARY OF THE INVENTION

### PROBLEMS TO BE SOLVED BY THE INVENTION

In laminated glass prepared with a conventional wedge-like interlayer film containing a heat shielding compound, even though generation of double images can be inhibited to some extent, the balance of the solar transmittance may be disrupted with the change in thickness of the interlayer film, and unevenness in heat shielding performance may occur.

It is an object of the present invention to provide an interlayer film for laminated glass capable of suppressing generation of double images, and suppressing unevenness in heat shielding performance in laminated glass. It is also an object of the present invention to provide a laminated glass prepared with the interlayer film for laminated glass.

MEANS FOR SOLVING THE PROBLEMS

According to a broad aspect of the present invention, there is provided an interlayer film for laminated glass (hereinafter, sometimes referred to as interlayer film) that is an interlayer film for laminated glass having one end and the other end, the interlayer film having a region having a partial wedge angle of 0.05 mrad or more in a length of 400 mm in a direction connecting the one end and the other end, the interlayer film including a heat shielding layer containing a heat shielding substance and the layer having a glass transition point of 15°C or more, the interlayer film having a part satisfying a formula (1) below and having Tts2 of 79% or less when a distance between the one end and the other end of the interlayer film is referred to as X, a thickness of the interlayer film at an arbitrary position (1) of the interlayer film within a region of 0.1X to 0.9X from the one end toward the other end is referred to as T1 mm, a thickness of the interlayer film at a position (2) where the thickness of the interlayer film is smaller than the thickness of the interlayer film at the position (1) within a region of 0.1X to 0.9X from the one end toward the other end by 25 μm or more is referred to as T2 mm, and in a laminated glass A obtained by sandwiching the interlayer film between two sheets of clear glass, a solar transmittance of the laminated glass A at the position (1) is referred to as Tts1%, and a solar transmittance of the laminated glass A at the position (2) is referred to as Tts2%.

[Numerical formula 1]

$$\Delta Tts < Tts2 - (a \times ln(T1) + b) \qquad \cdots (1)$$

In the formula (1), $\Delta$Tts, a and b are, respectively, values indicated by a formula (1-1A), a formula (1-1B) and a formula (1-1C) below, and in the formula (1-1B) and the formula (1-1C), A, B and C are, respectively, values indicated by a formula (1-D), a formula (1-E) and a formula (1-F) below.

[Numerical formula 2].

$$\Delta Tts = Tts2 - Tts1 \qquad \cdots (1 - 1A)$$

$$a = \frac{-(B + ln(T2)) + \sqrt{(B + ln(T2))^2 - 4A(C - Tts2)}}{2A} \qquad \cdots (1 - 1B)$$

$$b = Aa^2 + Ba + C \qquad \cdots (1 - 1C)$$

$$A = -0.2921 \qquad \cdots (1 - 1D)$$

$$B = -1.4431 \qquad \cdots (1 - 1E)$$

$$C = 78.013 \qquad \cdots (1 - 1F)$$

In a specific aspect of the interlayer film according to the present invention, the position (1) is a maximum thickness position (X1) of the interlayer film within a region of 0.1X to 0.9X from the one end toward the other end, and the position (2) is a minimum thickness position (X2) of the interlayer film within a region of 0.1X to 0.9X from the one end toward the other end.

In a specific aspect of the interlayer film according to the present invention, the interlayer film satisfies a formula (2) below.
[Numerical formula 3]

$$\Delta Tts < K \times (Tts2 - (a \times ln(T1) + b)) \qquad \cdots (2)$$

In the formula (2), $\Delta$Tts, a, and b are, respectively, values indicated by the formula (1-1A), the formula (1-1B) and the formula (1-1C), and K is 0.95.

In a specific aspect of the interlayer film according to the present invention, the interlayer film satisfies $\Delta$Tts > 0 in the formula (1).

In a specific aspect of the interlayer film according to the present invention, the interlayer film satisfies a formula (3) below.
[Numerical formula 4]

$$|\Delta Tts| < K \times |Tts2 - (a \times ln(T1) + b)| \qquad \cdots (3)$$

In the formula (3), $\Delta$Tts, a, and b are, respectively, values indicated by the formula (1-1A), the formula (1-1B) and the formula (1-1C), and K is 0.95.

In a specific aspect of the interlayer film according to the present invention, a maximum value of the solar transmittance of the laminated glass A within a region of 0.1X to 0.9X from the one end toward the other end is 76% or less.

In a specific aspect of the interlayer film according to the present invention, a position where the solar transmittance of the laminated glass A shows a maximum value within a region of 0.1X to 0.9X from the one end toward the other end is different from the position (1) and is different from the position (2).

In a specific aspect of the interlayer film according to the present invention, a position where the solar transmittance of the laminated glass A shows a maximum value within a region of 0.1X to 0.9X from the one end toward the other end is the position (1) or the position (2).

In a specific aspect of the interlayer film according to the present invention, a position where the solar transmittance of the laminated glass A shows a minimum value within a region of 0.1X to 0.9X from the one end toward the other end is different from the position (1) and is different from the position (2).

In a specific aspect of the interlayer film according to the present invention, a position where the solar transmittance of the laminated glass A shows a minimum value within a region of 0.1X to 0.9X from the one end toward the other end is the position (1) or the position (2).

In a specific aspect of the interlayer film according to the present invention, a maximum value of the visible light transmittance of the laminated glass A within a region of 0.1X to 0.9X from the one end toward the other end is 60% or more.

According to a broad aspect of the present invention, there is provided an interlayer film for laminated glass (hereinafter, sometimes referred to as interlayer film) that is an interlayer film for laminated glass having one end and the other end, the interlayer film having a region having a partial wedge angle of 0.05 mrad or more in a length of 400 mm in a direction connecting the one end and the other end, the interlayer film including a heat shielding layer containing a heat shielding substance and the layer having a glass transition point of 15°C or more, the heat shielding layer having a region where a content of the heat shielding substance is 0.01% by weight or more in the thickness direction, the heat shielding layer having an absolute value of difference between a concentration of the heat shielding substance in a region where the concentration of the heat shielding substance is highest and a concentration of the heat shielding substance in a region where the concentration of the heat shielding substance is lowest in the thickness direction of 0.01% by weight or more.

In a specific aspect of the interlayer film according to the present invention, when a distance from a first outer surface to a second outer surface of the interlayer film is referred to as t, the heat shielding substance exists in a region of more than 0t to 0.2t from the first outer surface toward the second outer surface.

In a specific aspect of the interlayer film according to the present invention, when a distance from a first outer surface to a second outer surface of the interlayer film is referred to as t, the heat shielding substance exists in a region of more than 0.2t to 0.4t from the first outer surface toward the second outer surface.

In a specific aspect of the interlayer film according to the present invention, when a distance from a first outer surface to a second outer surface of the interlayer film is referred to as t, the heat shielding substance exists in a region of more than 0.4t to 0.5t from the first outer surface toward the second outer surface.

In a specific aspect of the interlayer film according to the present invention, the interlayer film includes a layer having a glass transition point of less than 15°C.

In a specific aspect of the interlayer film according to the present invention, the interlayer film includes two or more layers having a glass transition point of less than 15°C.

In a specific aspect of the interlayer film according to the present invention, the layer having a glass transition point of less than 15°C contains a heat shielding substance.

In a specific aspect of the interlayer film according to the present invention, a content of the heat shielding substance in 100% by weight of the layer having a glass transition point of less than 15°C is 0.01% by weight or less.

In a specific aspect of the interlayer film according to the present invention, the interlayer film contains two or more kinds of heat shielding substances.

In a specific aspect of the interlayer film according to the present invention, the interlayer film contains two or more kinds of heat shielding substances, and in 100% by weight of the interlayer film, a content of each of two or more kinds of the heat shielding substances is 1.0% by weight or less.

In a specific aspect of the interlayer film according to the present invention, the interlayer film contains three or more kinds of heat shielding substances.

In a specific aspect of the interlayer film according to the present invention, concentration of the heat shielding substance in the heat shielding layer is 1.5% by weight or less in the thickness direction of the maximum thickness position of the interlayer film within a region of 0.1X to 0.9X from the one end toward the other end.

In a specific aspect of the interlayer film according to the present invention, the heat shielding substance contained in the interlayer film is a vanadium phthalocyanine compound, ITO particles, or CWO particles.

In a specific aspect of the interlayer film according to the present invention, the interlayer film as a whole has a wedge angle of 0.05 mrad or more.

In a specific aspect of the interlayer film according to the present invention, the interlayer film includes a layer having a storage modulus at 20°C of 4 MPa or more, the interlayer film has uneven surface given by an emboss roll method or a melt fracture method, the uneven surface has a ten-point average roughness of 1 μm or more and 100 μm or less, and the interlayer film has a refractive index of 1.46 or more.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

In a specific aspect of the laminated glass according to the present invention, the first lamination glass member has a uniform thickness, and the second lamination glass member has a uniform thickness.

According to a broad aspect of the present invention, there is provided a production method that fits either of 1) and b) below:

1) Method for producing the interlayer film for laminated glass described above, and
2) Method for producing the laminated glass described above.

## EFFECT OF THE INVENTION

According to the present invention, it is possible to provide an interlayer film for laminated glass capable of suppressing generation of double images, and suppressing unevenness in heat shielding performance in laminated glass.

## BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an interlayer film for laminated glass in accordance with a third embodiment of the present invention.
[Fig. 4] Fig. 4 is a sectional view schematically showing an interlayer film for laminated glass in accordance with a fourth embodiment of the present invention.
[Fig. 5] Fig. 5 is a sectional view schematically showing an interlayer film for laminated glass in accordance with a fifth embodiment of the present invention.
[Fig. 6] Fig. 6 is a sectional view schematically showing an interlayer film for laminated glass in accordance with a sixth embodiment of the present invention.
[Fig. 7] Fig. 7 is a diagram for illustrating a method for deriving a relational formula.

## MODES FOR CARRYING OUT THE INVENTION

Hereinafter, the details of the present invention will be described.

(Interlayer film for laminated glass)

The interlayer film for laminated glass (in the present specification, sometimes abbreviated as "interlayer film") according to the present invention is used for laminated glass.

The interlayer film has one end and the other end. The other end is an end part being opposite to the one end. The direction connecting the one end and the other end of the interlayer film is a direction orthogonal to the width direction of the interlayer film (perpendicular direction).

The interlayer film has a region where the thickness continuously varies. The interlayer film has a region where a partial wedge angle in a length of 400 mm in a direction connecting the one end and the other end is 0.05 mrad or more. Accordingly, it is possible suppress generation of double images.

The interlayer film includes a heat shielding layer containing a heat shielding substance and having a glass transition point of 15°C or more. In the interlayer film, only one heat shielding layer may exist, two heat shielding layers may exist, and two or more heat shielding layers may exist. In the interlayer film, ten or less heat shielding layers may exist, and five or less heat shielding layers may exist.

In the present invention, a distance between the one end and the other end of the interlayer film is referred to as X. Also, in the present invention, a thickness of the interlayer film at an arbitrary position (1) of the interlayer film within a region of 0.1X to 0.9X from the one end toward the other end of the interlayer film is referred to as T1 (mm). Also, in the present invention, a thickness of the interlayer film at a position (2) where the thickness of the interlayer film is smaller than the thickness of the interlayer film at the position (1) within a region of 0.1X to 0.9X from the one end toward the other end of the interlayer film by 25 $\mu$m or more is referred to as T2 (mm).

Also, in the present invention, in a laminated glass A obtained by sandwiching the interlayer film between two sheets of clear glass, a solar transmittance of the laminated glass A at the position (1) is referred to as Tts1 (%), and a solar transmittance of the laminated glass A at the position (2) is referred to as Tts2 (%). It is preferred that the laminated glass A be prepared in the following manner.

The interlayer film is sandwiched between two sheets of clear glass conforming to JIS R3202:1996 having a thickness of 2 mm to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass A.

Also, the solar transmittance of the laminated glass A is measured in accordance with ISO 13837 (First edition 2008-04-15) using a spectrophotometer ("U-4100" available from Hitachi High-Tech Corporation). The solar transmittance of the laminated glass A is a solar transmittance at a wavelength of 300 nm to 2500 nm.

From the viewpoint of suppressing unevenness in heat shielding performance, it is preferred that the interlayer film have a part satisfying the following formula (1) and have a Tts2 of 79% or less. In the interlayer film, a line for positioning with a lamination glass member sometimes exists in an end part. When a region having a visible light transmittance of less than 60% like such a line exists, the following formula (1) is determined while the region having a visible light transmittance of less than 60% and a region of 100 mm outward from an end part of the region are excluded.

[Numerical formula 5]

$$\Delta Tts < Tts2 - (a \times ln(T1) + b) \qquad \cdots (1)$$

In the formula (1), ∆Tts, a and b are, respectively, values indicated by a formula (1-1A), a formula (1-1B) and a formula (1-1C) below, and in the formula (1-1B) and the formula (1-1C), A, B and C are, respectively, values indicated by a formula (1-D), a formula (1-E) and a formula (1-F) below.

[Numerical formula 6]

$$\Delta Tts = Tts2 - Tts1 \qquad \cdots (1-1A)$$

$$a = \frac{-(B + ln(T2)) + \sqrt{(B + ln(T2))^2 - 4A(C - Tts2)}}{2A} \qquad \cdots (1-1B)$$

$$b = Aa^2 + Ba + C \qquad \cdots (1-1C)$$

$$A = -0.2921 \qquad \cdots (1-1D)$$

$$B = -1.4431 \qquad \cdots (1-1E)$$

$$C = 78.013 \qquad \cdots (1-1F)$$

<Deriving method and technical significance of formula (1)>

First, the present inventors prepared a single-layered resin film (wedge angle 0 mrad) having a uniform thickness and not containing a heat shielding substance. The resin film is a resin film containing 100 parts by weight of a polyvinyl acetal resin, and 36.8 parts by weight of triethylene glycol di-2-ethylhexanoate (3GO). Using the obtained resin film, a laminated glass was prepared according to the preparation method of laminated glass A as describe above, and solar transmittance of the laminated glass was measured. As a result of this, the relationship shown in the following Table 1 was obtained as the relationship between the thickness of the resin film and the solar transmittance of the laminated glass.

[Table 1]

| Thickness of resin film (mm) | Solar transmittance Tts (%) |
|---|---|
| 0.5 | 81.1 |
| 0.76 | 80.5 |
| 1 | 80.0 |
| 1.6 | 78.6 |

Next, the present inventors prepared single-layered resin films having a thickness of 0.5 mm (wedge angle 0 mrad) and laminated glasses in the same manner as described above except that the heat shielding substances shown in the following Table 2 were used in the contents (content in 100% by weight of resin film) described in conditions 1 to 3. The obtained resin films contain 100 parts by weight of polyvinyl acetal resin, 36.8 parts by weight of triethylene glycol di-2-ethylhexanoate (3GO), and a heat shielding substance of the content of conditions 1 to 3. Solar transmittance of the obtained laminated glass was measured. As a result, the relationship shown in the following Table 2 was obtained.

[Table 2]

| Substance name | Classification | Content of each ingredient in 100% by weight of resin film (% by weight) | | |
|---|---|---|---|---|
| | | Condition 1 | Condition 2 | Condition 3 |
| 43V | Heat shielding substance | 0 | 0 | 0.122 |
| ITO | Heat shielding substance | 0 | 0.1 | 0.05 |
| CWO | Heat shielding substance | 0.1 | 0.0005 | 0.0015 |
| Thickness of resin film (mm) | | Solar transmittance Tts (%) | | |
| | | Condition 1 | Condition 2 | Condition 3 |
| 0.5 | | 60.3 | 67.6 | 72.4 |

Heat shielding substances in Table 2 are as follows.

43V: Vanadium phthalocyanine compound ("NIR-43V" available from YAMADA CHEMICAL CO., LTD,)
ITO: (Tin-doped indium oxide particles (ITO particles)
CWO: Cesium-doped tungsten oxide particles (CWO particles)

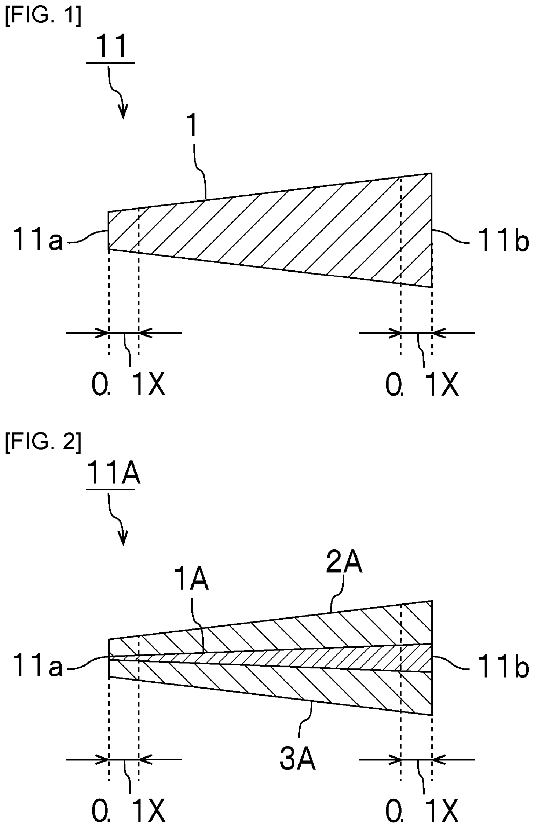

In addition to the single-layered resin films having the compositions of conditions 1 to 3 of Table 2 and a wedge angle of 0 mrad, the present inventors prepared wedge-like single-layered resin films having the compositions of conditions 1 to 3 of Table 2 and a wedge angle of 0.24 mrad and 0.84 mrad (sectional shape is shown in Fig. 1). While Fig. 1 is a sectional view schematically showing an interlayer film for laminated glass corresponding to the present invention as will be described later, Fig. 1 was referenced so as to promote understanding of the sectional shape of the resin layer in the preceding text. The obtained resin films contain 100 parts by weight of polyvinyl acetal resin, 36.8 parts by weight of triethylene glycol di-2-ethylhexanoate (3GO), and a heat shielding substance of the content of conditions 1 to 3. Using the obtained wedge-like resin film, a laminated glass was prepared according to the preparation method of laminated glass A as describe above, and solar transmittance of the laminated glass was measured. It is to be noted that solar transmittance was measured at the minimum thickness position and the maximum thickness position of the wedge-like resin film. As a result of this, the relationship shown in the following Table 3 was obtained as the relationship between the thickness of the resin film and the solar transmittance of the laminated glass.

[Table 3]

| Wedge angle mrad | Thickness mm | | Solar transmittance Tts% | | |
|---|---|---|---|---|---|
| | | | Condition 1 | Condition 2 | Condition 3 |
| 0 (basis) | | 0.5 | 60.3 | 67.6 | 72.4 |
| 0.24 | (Minimum) | 0.76 | 55.0 | 63.5 | 69.2 |
| | (Maximum) | 1 | 51.6 | 60.5 | 66.7 |

(continued)

| Wedge angle mrad | Thickness mm | | Solar transmittance Tts% | | |
|---|---|---|---|---|---|
| | | | Condition 1 | Condition 2 | Condition 3 |
| 0.84 | (Minimum) | 0.76 | 55.0 | 63.5 | 69.2 |
| | (Maximum) | 1.6 | 46.2 | 55.1 | 61. 9 |

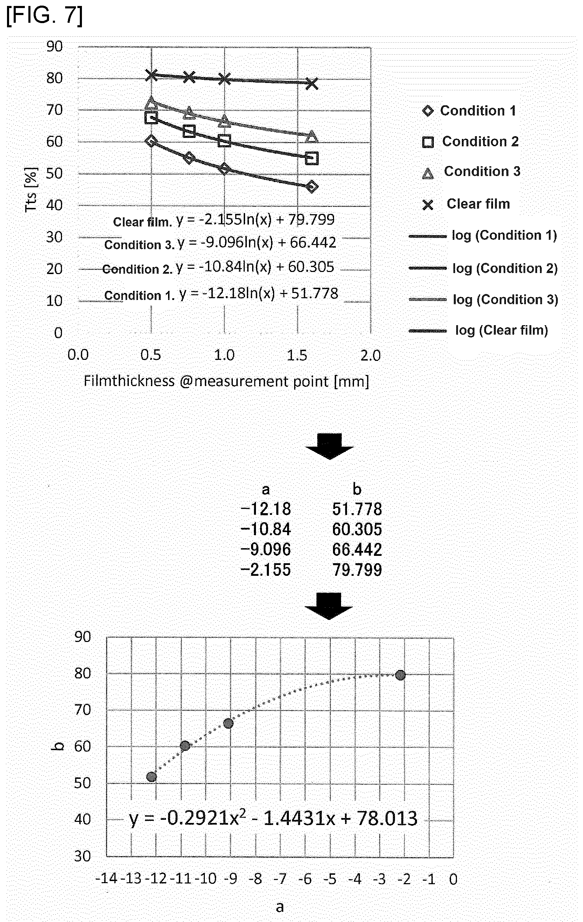

From the result of Table 3, the following formula (LB) is calculated, and the relationship of Fig. 7 is derived. In the following formula (LB1), T2 is the minimum value of the thickness of the resin film.

[Numerical formula 7].

$$Tts(T) = a \times ln(T) + b \qquad \cdots (LB)$$

$$a = \frac{-(B + ln(T2)) + \sqrt{(B + ln(T2))^2 - 4A(C - Tts2)}}{2A} \qquad \cdots (LB1)$$

$$b = Aa^2 + Ba + C \qquad \cdots (LB2)$$

$$A = -0.2921 \qquad \cdots (LB3)$$

$$B = -1.4431 \qquad \cdots (LB4)$$

$$C = 78.013 \qquad \cdots (LB5)$$

The formula (LB) means that if thickness and solar transmittance at a certain position are known, it is possible to calculate solar transmittance at other position by measuring the thickness of the other position. Therefore, from the formula (LB), a difference ($\Delta Tts_{ideal}$) between the solar transmittance (Tts1) of the laminated glass A at the position (1) of the interlayer film having thickness difference and the solar transmittance (Tts2) of the laminated glass A at the position (2) is calculated by the following formula (0). In the following formula (0), the position (1) is the maximum thickness position (X1) of the interlayer film within a region of 0.1X to 0.9X from the one end toward the other end of the interlayer film, and T1 is a thickness of the interlayer film at the maximum thickness position (X1). In the following formula (0), the position (2) is the minimum thickness position (X2) of the interlayer film within a region of 0.1X to 0.9X from the one end toward the other end of the interlayer film, and T2 is a thickness of the interlayer film at the minimum thickness position (X2).
[Numerical formula 8]

$$\Delta Tts_{ideal} = Tts2 - (a \times ln(T1) + b) \qquad \cdots (0)$$

If $\Delta$Tts is smaller than $\Delta$Tts$_{ideal}$, it means that unevenness in heat shielding performance of laminated glass is suppressed. In other words, the interlayer film having a part satisfying the formula (1) means that unevenness in heat shielding performance of laminated glass is suppressed.
Examples of the method for satisfying the formula (1) include a method of adjusting the concentration distribution of the heat shielding substance in the thickness direction by a feed block method, a method of adjusting the concentration distribution of the heat shielding substance in the thickness direction by a die method, and a method of adhering a layer containing a heat shielding substance with a small deviation of Tts and a layer not containing a heat shielding substance.
In the formula (1), $\Delta$Tts > 0 may be satisfied, $\Delta$Tts < 0 may be satisfied, and $\Delta$Tts = 0 may be satisfied.

Tts2 is preferably 79% or less, more preferably 77% or less, further preferably 75% or less, especially preferably 73% or less, most preferably 71% or less. When the Tts2 s the above upper limit or less, it is possible to further enhance the heat shielding performance of laminated glass, and it is possible to suppress the unevenness in heat shielding performance more effectively. The Tts2 may be 30% or more, may be 35% or more, may be 40% or more, and may be 45% or more.

It is preferred that the position (1) be the maximum thickness position (X1) of the interlayer film within a region of 0.1X to 0.9X from the one end toward the other end of the interlayer film. It is preferred that the position (2) be the minimum thickness position (X2) of the interlayer film within a region of 0.1X to 0.9X from the one end toward the other end of the interlayer film. In the case of the interlayer film having this preferred form, an absolute value of difference between the thickness of the interlayer film at the maximum thickness position (X1) and the thickness of the interlayer film at the minimum thickness position (X2) is 25 μm or more.

It is preferred that the interlayer film satisfy the following formula (2). In this case, it is possible to suppress the unevenness in heat shielding performance of laminated glass more effectively.

[Numerical formula 9]

$$\Delta Tts < K \times (Tts2 - (a \times ln(T1) + b)) \qquad \cdot \cdot \cdot (2)$$

In the formula (2), ΔTts, a, and b are, respectively, values indicated by the formula (1-1A), the formula (1-1B) and the formula (1-1C), and K is 0.95.

In the formula (2), K is 0.95, however, K is preferably 0.90, more preferably 0.85, more preferably 0.80, more preferably 0.75, more preferably 0.70, further preferably 0.65, still further preferably 0.60, especially preferably 0.50. In this case, it is possible to suppress the unevenness in heat shielding performance of laminated glass still more effectively. When K is changed to these preferred values in the formula (2), it is preferred that the interlayer film satisfy the formula (2) after change.

It is preferred that the interlayer film satisfy the following formula (3). In this case, it is possible to suppress the unevenness in heat shielding performance of laminated glass more effectively.

[Numerical formula 10]

$$|\Delta Tts| < K \times |Tts2 - (a \times ln(T1) + b)| \qquad \cdot \cdot \cdot (3)$$

In the formula (3), ΔTts, a, and b are, respectively, values indicated by the formula (1-1A), the formula (1-1B) and the formula (1-1C), and K is 0.95.

In the formula (3), K is 0.95, however, K is preferably 0.90, more preferably 0.85, more preferably 0.80, more preferably 0.75, more preferably 0.70, further preferably 0.65, still further preferably 0.60, especially preferably 0.50. In this case, it is possible to suppress the unevenness in heat shielding performance of laminated glass still more effectively. When K is changed to these preferred values in the formula (3), it is preferred that the interlayer film satisfy the formula (3) after change.

A distance (X) between the one end and the other end of the interlayer film is preferably 400 mm or more, more preferably 500 mm or more, still more preferably 600 mm or more, further preferably 700 mm or more, still further preferably 800 mm or more, especially preferably 900 mm or more, most preferably 1000 mm or more, and is preferably 3000 mm or less, more preferably 2500 mm or less, still more preferably 2000 mm or less, further preferably 1900 mm or less, still further preferably 1800 mm or less, especially preferably 1700 mm or less.

A position where the solar transmittance of the laminated glass A shows a maximum value within a region of 0.1X to 0.9X from the one end toward the other end of the interlayer film is different from the position (1) and may be different from the position (2). A position where the solar transmittance of the laminated glass A shows a maximum value within a region of 0.1X to 0.9X from the one end toward the other end of the interlayer film may be the position (1) or the position (2).

A position where the solar transmittance of the laminated glass A shows a maximum value within a region of 0.1X to 0.9X from the one end toward the other end of the interlayer film may exist within a region of 0.15X to 0.85X from the one end toward the other end, and more may exist within a region of 0.2X to 0.8X from the one end toward the other end. In this case, it is possible to further enhance the heat shielding performance of laminated glass.

A position where the solar transmittance of the laminated glass A shows a minimum value within a region of 0.1X to 0.9X from the one end toward the other end of the interlayer film is different from the position (1) and may be different from the position (2). A position where the solar transmittance of the laminated glass A shows a minimum value within a region of 0.1X to 0.9X from the one end toward the other end of the interlayer film may be the position (1) or the position (2).

A maximum value of the solar transmittance of the laminated glass A within a region of 0.1X to 0.9X from the one end toward the other end of the interlayer film is preferably 79% or less, more preferably 76% or less, more preferably 74% or less, more preferably 72% or less, still more preferably 70% or less, further preferably 68% or less, still further preferably 66% or less, especially preferably 64% or less. When the maximum value is the above upper limit or less, it is possible to further enhance the heat shielding performance. The maximum value of the solar transmittance of the laminated glass A within a region of 0.1X to 0.9X from the one end toward the other end of the interlayer film may be 30% or more, may be 35% or more, may be 40% or more, and may be 45% or more.

A maximum value of the visible light transmittance of the laminated glass A within a region of 0.1X to 0.9X from the one end toward the other end of the interlayer film is preferably 60% or more, more preferably 62% or more, more preferably 64% or more, still more preferably 66% or more, further preferably 68% or more, still further preferably 70% or more, especially preferably 72% or more, most preferably 74% or more, and is preferably 88% or less, more preferably 87% or less, more preferably 86% or less, more preferably 85% or less, still more preferably 83% or less, further preferably 81% or less, still further preferably 80% or less, especially preferably 78% or less, most preferably 76% or less. When the maximum value is the above lower limit or more and the above upper limit or less, it is possible to further enhance the visibility.

A position where the visible light transmittance of the laminated glass A shows a maximum value within a region of 0.1X to 0.9X from the one end toward the other end of the interlayer film is different from the position (1) and may be different from the position (2). A position where the visible light transmittance of the laminated glass A shows a maximum value within a region of 0.1X to 0.9X from the one end toward the other end of the interlayer film may be the position (1) or the position (2).

A position where the visible light transmittance of the laminated glass A shows a maximum value within a region of 0.1X to 0.9X from the one end toward the other end may exist within a region of 0.15X to 0.85X from the one end toward the other end, and more may exist within a region of 0.2X to 0.8X from the one end toward the other end.

A position where the visible light transmittance of the laminated glass A shows a minimum value within a region of 0.1X to 0.9X from the one end toward the other end of the interlayer film is different from the position (1) and may be different from the position (2). A position where the visible light transmittance of the laminated glass A shows a minimum value within a region of 0.1X to 0.9X from the one end toward the other end of the interlayer film may be the position (1) or the position (2).

In the laminated glass A, a visible light transmittance of the laminated glass A at the position (1) is referred to as a Tv1 (%), and a visible light transmittance of the laminated glass A at the position (2) is referred to as a Tv2 (%).

The Tv1 is preferably 60% or more, more preferably 65% or more, still more preferably 70% or more, further preferably 72% or more, still further preferably 73% or more, especially preferably 74% or more, most preferably 75% or more, and is preferably 88% or less, more preferably 87% or less, more preferably 86% or less, more preferably 85% or less, still more preferably 83% or less, further preferably 81% or less, still further preferably 80% or less, especially preferably 78% or less, most preferably 76% or less. When the Tv1 is the above lower limit or more and the above upper limit or less, it is possible to further enhance the visibility.

The Tv2 is preferably 60% or more, more preferably 65% or more, still more preferably 70% or more, further preferably 72% or more, still further preferably 73% or more, especially preferably 74% or more, most preferably 75% or more, and is preferably 88% or less, more preferably 87% or less, more preferably 86% or less, more preferably 85% or less, still more preferably 83% or less, further preferably 81% or less, still further preferably 80% or less, especially preferably 78% or less, most preferably 76% or less. When the Tv2 is the above lower limit or more and the above upper limit or less, it is possible to further enhance the visibility.

The visible light transmittance of the laminated glass A is measured in accordance with JIS R3212:2015 using a spectrophotometer ("U-4100" available from Hitachi High-Tech Corporation). The visible light transmittance of the laminated glass A is a visible light transmittance at a wavelength of 380 nm to 780 nm.

The visible light transmittance of the laminated glass A within a region of 0.1X to 0.9X from the one end toward the other end of the interlayer film can be measured, for example, at positions with intervals of 100 mm from the one end toward the other end, starting from the position of 0.1X from the one end toward the other end.

The interlayer film preferably has a region where the partial wedge angle in a length of 400 mm in the direction connecting the one end and the other end is 0.05 mrad or more, more preferably has a region where the partial wedge angle in a length of 400 mm in the direction connecting the one end and the other end is 0.10 mrad or more, further preferably has a region where the partial wedge angle in a length of 400 mm in the direction connecting the one end and the other end is 0.15 mrad or more, and preferably has a region where the partial wedge angle in a length of 400 mm in the direction connecting the one end and the other end is 2.00 mrad or less, more preferably has a region where the partial wedge angle in a length of 400 mm in the direction connecting the one end and the other end is 1.75 mrad or less, further preferably has a region where the partial wedge angle in a length of 400 mm in the direction connecting the one end and the other end is 1.50 mrad or less. In this case, it is possible to suppress double images more effectively.

The partial wedge angle in a length of 400 mm in the direction connecting the one end and the other end is determined in the following manner.

Thickness is measured in the direction connecting the one end and the other end of the interlayer film. Points A are selected at 1-mm intervals starting at a position of 200 mm from the one end toward the other end of the interlayer film as a starting point and ending at a position of 200 mm from the other end toward the one end of the interlayer film as an ending point. In each partial region of 400 mm in the direction connecting the one end and the other end centered at each point A, a primary line is obtained by the least squares method by plotting the distance (unit: mm) in the direction connecting the one end toward the other end on the x-axis, and the thickness of the interlayer film (unit: $\mu$m) on the y axis. The interior angle formed by the obtained primary line and the line of y = 0 is regarded as a partial wedge angle at that point A.

In order to suppress double images, the wedge angle ($\theta$) of the interlayer film as a whole can be appropriately set according to the fitting angle of laminated glass.

The wedge angle ($\theta$) of the interlayer film as a whole may be 0.05 mrad or more, or may be less than 0.05 mrad. From the viewpoint of further suppressing double images, the wedge angle ($\theta$) of the interlayer film as a whole is preferably 0.1 mrad (0.00575 degrees) or more, more preferably 0.2 mrad (0.0115 degrees) or more, and is preferably 2 mrad (0.1146 degrees) or less, more preferably 0.7 mrad (0.0401 degrees) or less. When the wedge angle ($\theta$) is the above lower limit or more, it is possible to obtain laminated glass suited for cars such as a truck or a bus in which the attachment angle of the windshield is large. When the wedge angle ($\theta$) is the above upper limit or less, it is possible to obtain laminated glass suited for cars such as a sports car in which the attachment angle of the windshield is small.

The wedge angle ($\theta$) of the interlayer film as a whole is an angle formed by a primary line obtained by the least squares method and a line of y = 0 when the distance (unit: mm) in the direction connecting the one end toward the other end is plotted on the x-axis, and the thickness of the interlayer film (unit: $\mu$m) is plotted on the y axis in the region of 0.1X to 0.9X from the one end toward the other end of the interlayer film.

The minimum thickness of the interlayer film is preferably 0.05 mm or more, more preferably 0.1 mm or more, still more preferably 0.2 mm or more, further preferably 0.3 mm or more, still further preferably 0.4 mm or more, especially preferably 0.5 mm or more, most preferably 0.6 mm or more, and is preferably 3 mm or less, more preferably 2.5 mm or less, still more preferably 2.25 mm or less, further preferably 2 mm or less, still further preferably 1.8 mm or less.

The absolute value of difference between the maximum thickness and the minimum thickness of the interlayer film is preferably 25 $\mu$m or more, more preferably 50 $\mu$m or more, further preferably 100 $\mu$m or more, especially preferably 150 $\mu$m or more, most preferably 200 $\mu$m or more, and is preferably 3000 $\mu$m or less, more preferably 2000 $\mu$m or less, further preferably 1750 $\mu$m or less, especially preferably 1500 $\mu$m or less. When the absolute value of difference is the above lower limit or more and the above upper limit or less, it is possible to suppress double images of the laminated glass effectively.

As a measuring device for use for measurement of a wedge angle ($\theta$) of the interlayer film as a whole, and a thickness of the interlayer film, a contact type thickness meter "TOF-4R" (available from Yamabun Electronics Co., Ltd.) or the like can be recited.

Measurement of the thickness is conducted such that the distance is the shortest from the one end toward the other end by using the above-described measuring device at a film conveyance speed of 2.00 mm/minute to 2.25 mm/minute.

As a measuring device for use for measurement of a wedge angle ($\theta$) of the interlayer film as a whole, and a thickness of the interlayer film after the interlayer film is made into laminated glass, a non-contact type multilayer film thickness measuring instrument "OPTIGAUGE" (available from Lumetrics, Inc.) or the like can be recited. Use of the measuring instrument makes it possible to measure the thickness of the interlayer film while the interlayer film is in the laminated glass.

The interlayer film has a one-layer structure or a two or more-layer structure. The interlayer film may have a one-layer structure, may have a two-layer structure, and may have a two or more-layer structure. The interlayer film may have a three-layer structure, may have a three or more-layer structure, may have a four-layer structure, may have a four or more-layer structure, may have a five-layer structure, may have a five or more-layer structure. The interlayer film may include only a first layer. The interlayer film may include, a first layer, and a second layer arranged on a first surface side of the first layer. The interlayer film may include a first layer, a second layer arranged on a first surface side of the first layer, and a third layer arranged on a second surface side opposite to the first surface of the first layer. The interlayer film may include a fourth layer arranged between the first layer and the second layer. The interlayer film may include a fifth layer arranged between the first layer and the third layer. The interlayer film may be a single-layered interlayer film and may be a multi-layered interlayer film. The structure of the interlayer film may partially vary. For example, the interlayer film may have a part having a one-layer structure, and a part having a multi-layer structure. The interlayer film may have a ten or less-layer structure and may have a five or less-layer structure.

In the interlayer film, the first layer may be a heat shielding layer, and need not be a heat shielding layer. The second layer may be a heat shielding layer, and need not be a heat shielding layer. The third layer may be a heat shielding layer, and need not be a heat shielding layer. The fourth layer may be a heat shielding layer, and need not be a heat shielding layer. The fifth layer may be a heat shielding layer, and need not be a heat shielding layer.

The glass transition point of the heat shielding layer is 15°C or more, preferably 16°C or more, more preferably 17°C or more, and is preferably 30°C or less, more preferably 25°C or less.

In 100% of the total plane area of the interlayer film, the plane area of the part where the heat shielding layer exists

EP 4 509 477 A1

is preferably 75% or more, more preferably 80% or more, still more preferably 85% or more, further preferably 90% or more, especially preferably 95% or more, most preferably 100%. When the plane area of the part where the heat shielding layer exists is the above lower limit or more and the above upper limit or less, it is possible to exert the effect of the present invention more effectively. In 100% of the total plane area of the interlayer film, the plane area of the part where the heat shielding layer exists may be 100% or less, may be less than 100%, and may be 95% or less.

From the viewpoint of further enhancing the sound shielding performance of the laminated glass, it is preferred that the interlayer film include a layer having a glass transition point of less than 15°C, and it is more preferred that the interlayer film include two or more layers having a glass transition point of less than 15°C. The first layer may be a layer having a glass transition point of less than 15°C. The second layer may be a layer having a glass transition point of less than 15°C. The third layer may be a layer having a glass transition point of less than 15°C. The fourth layer may be a layer having a glass transition point of less than 15°C. The fifth layer may be a layer having a glass transition point of less than 15°C. The layer having a glass transition point of less than 15°C may contain a heat shielding substance.

The glass transition point of each layer of the interlayer film is measured in the following manner.

The interlayer film is stored at a temperature of 23°C and a humidity of 30% for a month or more. When the interlayer film is a single-layered interlayer film, the interlayer film is cut into a diameter of 8 mm to give a specimen. When the interlayer film is a multi-layered interlayer film, the layers are delaminated, and press-molded by a press molding machine to give a specimen of a layer to be measured. For each specimen, a glass transition point is measured. As an apparatus for measuring a glass transition point, "ARES-G2" available from TA Instruments and the like can be recited. Measurement of glass transition point is conducted using a parallel plate with a diameter of 8 mm as a jig, under the conditions in which the temperature is decreased from 100°C to -10°C at a temperature decreasing rate of 3°C/minute, and a frequency of 1 Hz and a strain of 1%. In the measurement results obtained, the peak temperature of the loss tangent is defined as a glass transition point (°C).

It is preferred that the interlayer film include a layer having a storage modulus at 20°C of 4 MPa or more. The first layer may be the layer having a storage modulus at 20°C of 4 MPa or more. The second layer may be the layer having a storage modulus at 20°C of 4 MPa or more. The third layer may be the layer having a storage modulus at 20°C of 4 MPa or more. The fourth layer may be the layer having a storage modulus at 20°C of 4 MPa or more. The fifth layer may be the layer having a storage modulus at 20°C of 4 MPa or more. The heat shielding layer may be the layer having a storage modulus at 20°C of 4 MPa or more. The interlayer film may have one layer having a storage modulus at 20°C of 4 MPa or more, or may have two or more layers having a storage modulus at 20°C of 4 MPa or more. The interlayer film may have ten or less layers having a storage modulus at 20°C of 4 MPa or more, or may have five or less layers having a storage modulus at 20°C of 4 MPa or more.

The storage modulus at 20°C of the layer having a storage modulus at 20°C of 4 MPa or more is preferably 5 MPa or more, more preferably 6 MPa or more, and is preferably 100 MPa or less, more preferably 80 MPa or less, further preferably 60 MPa or less.

The storage modulus at 20°C of each layer of the interlayer film is measured in the following manner.

When the interlayer film is a single-layered interlayer film, the interlayer film is cut into a size suited for the jig to give a specimen. When the interlayer film is a multi-layered interlayer film, the layers are delaminated, and press-molded by a press molding machine to give a specimen of a layer to be measured. In the case of a laminated glass, after cooling the laminated glass with liquid nitrogen or the like, the lamination glass member and the interlayer film are delaminated, and a specimen may be prepared from the delaminated interlayer film. The specimen is subjected to a shear viscoelasticity measurement of the range of 50 to 100 Hz at 20°C, and storage modulus is measured. As an apparatus for measuring viscoelasticity, "ARES-G2" available from TA Instruments, "DVA-200" available from IT Keisoku Seigyo Corporation and the like can be recited.

From the viewpoint of enhancing the visibility, the refractive index of the interlayer film is preferably 1.46 or more, more preferably 1.47 or more, further preferably 1.48 or more, and is preferably 1.60 or less, more preferably 1.55 or less, further preferably 1.53 or less.

Hereinafter, specific embodiments of the present invention will be described with reference to the drawings. One end in each layer of the interlayer film corresponds to one end of the interlayer film. The other end in each layer of the interlayer film corresponds to the other end of the interlayer film. A distance between one end and the other end of the interlayer film is X.

Fig. 1 is a sectional view schematically showing an interlayer film for laminated glass in accordance with a first embodiment of the present invention. In Fig. 1, a section in the thickness direction of an interlayer film 11 is shown.

The interlayer film 11 has one end 11a, and the other end 11b. In the interlayer film 11, the thickness of the one end 11a is smaller than the thickness of the other end 11b. The interlayer film 11 has a region where the thickness increases from the one end 11a toward the other end 11b.

The interlayer film 11 includes a first layer 1. The interlayer film 11 has a one-layer structure. In the first layer 1, the thickness at the one end of the first layer 1 is smaller than the thickness at the other end of the first layer 1. The first layer 1 has a region where the thickness increases from the one end toward the other end of the first layer 1. In the first layer 1, the increment in thickness from one end toward the other end of the first layer 1 is constant. The sectional shape in the thickness direction of the first layer 1 is a wedge-like shape.

The maximum thickness position (X1) of the interlayer film 11 within a region of 0.1X to 0.9X from the one end 11a toward the other end 11b of the interlayer film 11 is a position of 0.9X from the one end 11a toward the other end 11b. The minimum thickness position (X2) of the interlayer film 11 within a region of 0.1X to 0.9X from the one end 11a toward the other end 11b of the interlayer film 11 is a position of 0.1X from the one end 11a toward the other end 11b.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A has one end 11a, and the other end 11b. In the interlayer film 11A, the thickness of the one end 11a is smaller than the thickness of the other end 11b. The interlayer film 11A has a region where the thickness increases from the one end 11a toward the other end 11b.

The interlayer film 11A includes a first layer 1A, a second layer 2A, and a third layer 3A. The interlayer film 11A has a three-layer structure. The first layer 1A has a first surface and a second surface. The first surface and the second surface in the first layer 1A are surfaces facing to each other. The second layer 2A is arranged on a first surface side of the first layer 1A and to be layered thereon. The third layer 3A is arranged on a second surface side of the first layer 1A and to be layered thereon. The first layer 1A is an intermediate layer. Each of the second layer 2A and the third layer 3A is a surface layer.

In the first layer 1A, the thickness at the one end of the first layer 1A is smaller than the thickness at the other end of the first layer 1A. The first layer 1A has a region where the thickness increases from the one end toward the other end of the first layer 1A. In the first layer 1A, the increment in thickness from one end toward the other end of the first layer 1A is constant. The sectional shape in the thickness direction of the first layer 1A is a wedge-like shape.

In the second layer 2A, the thickness at the one end of the second layer 2A is smaller than the thickness at the other end of the second layer 2A. The second layer 2A has a region where the thickness increases from the one end toward the other end of the second layer 2A. In the second layer 2A, the increment in thickness from the one end toward the other end of the second layer 2A is constant. The sectional shape in the thickness direction of the second layer 2A is a wedge-like shape.

In the third layer 3A, the thickness at the one end of the third layer 3A is smaller than the thickness at the other end of the third layer 3A. The third layer 3A has a region where the thickness increases from the one end toward the other end of the third layer 3A. In the third layer 3A, the increment in thickness from the one end toward the other end of the third layer 3A is constant. The sectional shape in the thickness direction of the third layer 3A is a wedge-like shape.

The maximum thickness position (X1) of the interlayer film 11A within a region of 0.1X to 0.9X from the one end 11a toward the other end 11b of the interlayer film 11A is a position of 0.9X from the one end 11a toward the other end 11b. The minimum thickness position (X2) of the interlayer film 11A within a region of 0.1X to 0.9X from the one end 11a toward the other end 11b of the interlayer film 11A is a position of 0.1X from the one end 11a toward the other end 11b.

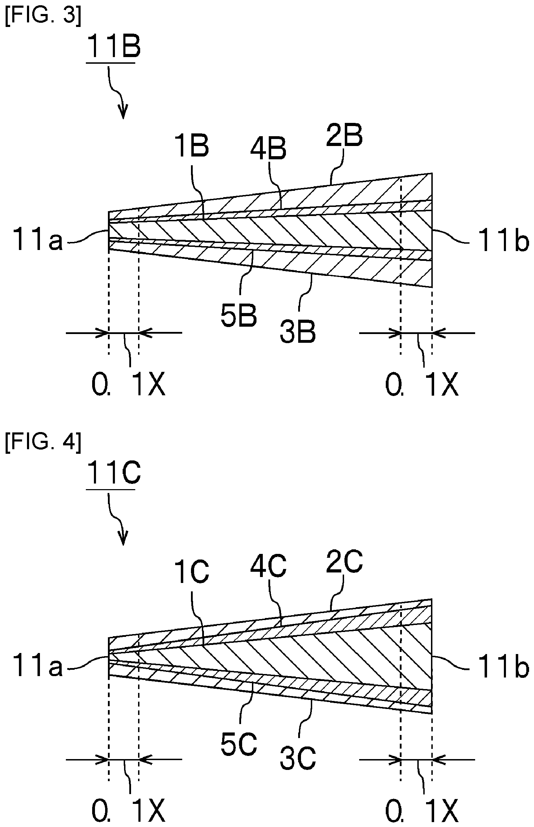

Fig. 3 is a sectional view schematically showing an interlayer film for laminated glass in accordance with a third embodiment of the present invention. In Fig. 3, a section in the thickness direction of an interlayer film 11B is shown.

The interlayer film 11B has one end 11a, and the other end 11b. In the interlayer film 11B, the thickness of the one end 11a is smaller than the thickness of the other end 11b. The interlayer film 11B has a region where the thickness increases from the one end 11a toward the other end 11b.

The interlayer film 11B includes a first layer 1B, a second layer 2B, a third layer 3B, a fourth layer 4B, and a fifth layer 5B. The interlayer film 11B has a five-layer structure. The first layer 1B has a first surface and a second surface. The first surface and the second surface in the first layer 1B are surfaces facing to each other. The fourth layer 4B is arranged on a first surface side of the first layer 1B and to be layered thereon. The fifth layer 5B is arranged on a second surface side of the first layer 1B and to be layered thereon. The second layer 2B is arranged on a surface side opposite to the first layer 1B side of the fourth layer 4B and to be layered thereon. The third layer 3B is arranged on a surface side opposite to the first layer 1B side of the fifth layer 5B and to be layered thereon. The first layer 1B, the fourth layer 4B and the fifth layer 5B are intermediate layers. Each of the second layer 2B and the third layer 3B is a surface layer.

In the first layer 1B, the thickness at the one end of the first layer 1B is smaller than the thickness at the other end of the first layer 1B. The first layer 1B has a region where the thickness increases from the one end toward the other end of the first layer 1B. In the first layer 1B, the increment in thickness from one end toward the other end of the first layer 1B is constant. The sectional shape in the thickness direction of the first layer 1B is a wedge-like shape.

In the second layer 2B, the thickness at the one end of the second layer 2B is smaller than the thickness at the other end of the second layer 2B. The second layer 2B has a region where the thickness increases from the one end toward the other end of the second layer 2B. In the second layer 2B, the increment in thickness from the one end toward the other end of the second layer 2B is constant. The sectional shape in the thickness direction of the second layer 2B is a wedge-like shape.

In the third layer 3B, the thickness at the one end of the third layer 3B is smaller than the thickness at the other end of the third layer 3B. The third layer 3B has a region where the thickness increases from the one end toward the other end of the third layer 3B. In the third layer 3B, the increment in thickness from the one end toward the other end of the third layer 3B is constant. The sectional shape in the thickness direction of the third layer 3B is a wedge-like shape.

In the fourth layer 4B, the thickness at the one end of the fourth layer 4B is smaller than the thickness at the other end of the fourth layer 4B. The fourth layer 4B has a region where the thickness increases from the one end toward the other end of the fourth layer 4B. In the fourth layer 4B, the increment in thickness from the one end toward the other end of the fourth layer 4B is constant. The sectional shape in the thickness direction of the fourth layer 4B is a wedge-like shape.

In the fifth layer 5B, the thickness at the one end of the fifth layer 5B is smaller than the thickness at the other end of the fifth layer 5B. The fifth layer 5B has a region where the thickness increases from the one end toward the other end of the fifth layer 5B. In the fifth layer 5B, the increment in thickness from the one end toward the other end of the fifth layer 5B is constant. The sectional shape in the thickness direction of the fifth layer 5B is a wedge-like shape.

The maximum thickness position (X1) of the interlayer film 11B within a region of 0.1X to 0.9X from the one end 11a toward the other end 11b of the interlayer film 11B is a position of 0.9X from the one end 11a toward the other end 11b. The minimum thickness position (X2) of the interlayer film 11B within a region of 0.1X to 0.9X from the one end 11a toward the other end 11b of the interlayer film 11B is a position of 0.1X from the one end 11a toward the other end 11b.

Fig. 4 is a sectional view schematically showing an interlayer film for laminated glass in accordance with a fourth embodiment of the present invention. In Fig. 4, a cross section in the thickness direction of an interlayer film 11C is shown.

The interlayer film 11C has one end 11a, and the other end 11b. In the interlayer film 11C, the thickness of the one end 11a is smaller than the thickness of the other end 11b. The interlayer film 11C has a region where the thickness increases from the one end 11a toward the other end 11b.

The interlayer film 11C includes a first layer 1C, a second layer 2C, a third layer 3C, a fourth layer 4C, and a fifth layer 5C. The interlayer film 11C has a five-layer structure. The first layer 1C has a first surface and a second surface. The first surface and the second surface in the first layer 1C are surfaces facing to each other. The fourth layer 4C is arranged on a first surface side of the first layer 1C and to be layered thereon. The fifth layer 5C is arranged on a second surface side of the first layer 1C and to be layered thereon. The second layer 2C is arranged on a surface side opposite to the first layer 1C side of the fourth layer 4C and to be layered thereon. The third layer 3C is arranged on a surface side opposite to the first layer 1C side of the fifth layer 5C and to be layered thereon. The first layer 1C, the fourth layer 4C and the fifth layer 5C are intermediate layers. Each of the second layer 2C and the third layer 3C is a surface layer.

In the first layer 1C, the thickness at the one end of the first layer 1C is smaller than the thickness at the other end of the first layer 1C. The first layer 1C has a region where the thickness increases from the one end toward the other end of the first layer 1C. In the first layer 1C, the increment in thickness from the one end toward the other end of the first layer 1C is constant. The sectional shape in the thickness direction of the first layer 1C is a wedge-like shape.

In the second layer 2C, the thickness at the one end of the second layer 2C is larger than the thickness at the other end of the second layer 2C. The second layer 2C has a region where the thickness decreases from the one end toward the other end of the second layer 2C. In the second layer 2C, the decrement in thickness from the one end toward the other end of the second layer 2C is constant. The sectional shape in the thickness direction of the second layer 2C is a wedge-like shape.

In the third layer 3C, the thickness at the one end of the third layer 3C is larger than the thickness at the other end of the third layer 3C. The third layer 3C has a region where the thickness decreases from the one end toward the other end of the third layer 3C. In the third layer 3C, the decrement in thickness from the one end toward the other end of the third layer 3C is constant. The sectional shape in the thickness direction of the third layer 3C is a wedge-like shape.

In the fourth layer 4C, the thickness at the one end of the fourth layer 4C is smaller than the thickness at the other end of the fourth layer 4C. The fourth layer 4C has a region where the thickness increases from the one end toward the other end of the fourth layer 4C. In the fourth layer 4C, the increment in thickness from the one end toward the other end of the fourth layer 4C is constant. The sectional shape in the thickness direction of the fourth layer 4C is a wedge-like shape.

In the fifth layer 5C, the thickness at the one end of the fifth layer 5C is smaller than the thickness at the other end of the fifth layer 5C. The fifth layer 5C has a region where the thickness increases from the one end toward the other end of the fifth layer 5C. In the fifth layer 5C, the increment in thickness from the one end toward the other end of the fifth layer 5C is constant. The sectional shape in the thickness direction of the fifth layer 5C is a wedge-like shape.

The maximum thickness position (X1) of the interlayer film 11C within a region of 0.1X to 0.9X from the one end 11a toward the other end 11b of the interlayer film 11C is a position of 0.9X from the one end 11a toward the other end 11b. The minimum thickness position (X2) of the interlayer film 11C within a region of 0.1X to 0.9X from the one end 11a toward the other end 11b of the interlayer film 11C is a position of 0.1X from the one end 11a toward the other end 11b.

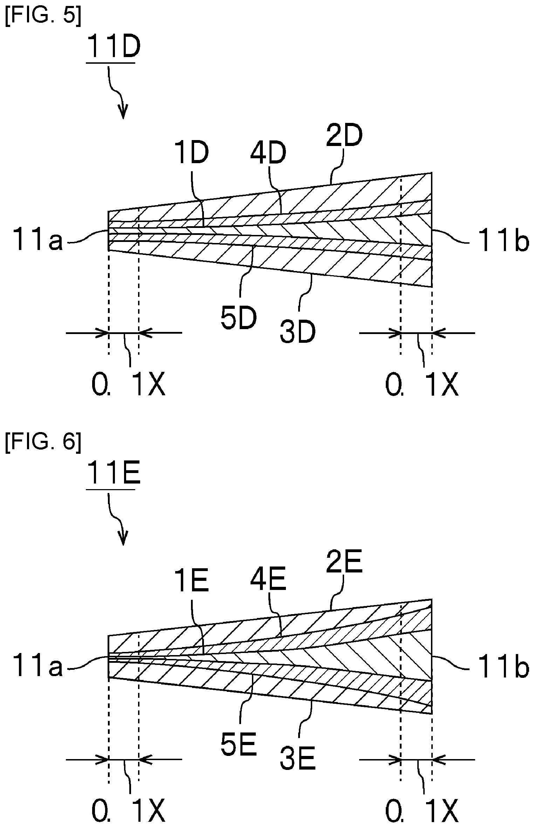

Fig. 5 is a sectional view schematically showing an interlayer film for laminated glass in accordance with a fifth embodiment of the present invention. In Fig. 5, a cross section in the thickness direction of the interlayer film 11D is shown.

The interlayer film 11D has one end 11a, and the other end 11b. In the interlayer film 11D, the thickness of the one end 11a is smaller than the thickness of the other end 11b. The interlayer film 11D has a region where the thickness increases from the one end 11a toward the other end 11b.

The interlayer film 11D includes a first layer 1D, a second layer 2D, a third layer 3D, a fourth layer 4D, and a fifth layer 5D. The interlayer film 11D has a five-layer structure. The first layer 1D has a first surface and a second surface. The first surface and the second surface in the first layer 1D are surfaces facing to each other. The fourth layer 4D is arranged on a first surface side of the first layer 1D and to be layered thereon. The fifth layer 5D is arranged on a second surface side of the first layer 1D and to be layered thereon. The second layer 2D is arranged on a surface side opposite to the first layer 1D side of the fourth layer 4D and to be layered thereon. The third layer 3D is arranged on a surface side opposite to the first layer 1D side of the fifth layer 5D and to be layered thereon. The first layer 1D, the fourth layer 4D and the fifth layer 5D are intermediate layers. Each of the second layer 2D and the third layer 3D is a surface layer.

In the first layer 1D, the thickness at the one end of the first layer 1D is smaller than the thickness at the other end of the first layer 1D. The first layer 1D has a region where the thickness increases from the one end toward the other end of the first layer 1D. The first layer 1D has a portion where the increment in thickness increases in the region where the thickness increases from the one end toward the other end of the first layer 1D. The sectional shape in the thickness direction of the first layer 1D is a wedge-like shape.

In the second layer 2D, the thickness at the one end of the second layer 2D is smaller than the thickness at the other end of the second layer 2D. The second layer 2D has a region where the thickness increases from the one end toward the other end of the second layer 2D. The second layer 2D has a portion where the increment in thickness decreases in the region where the thickness increases from the one end toward the other end of the second layer 2D. The sectional shape in the thickness direction of the second layer 2D is a wedge-like shape.

In the third layer 3D, the thickness at the one end of the third layer 3D is smaller than the thickness at the other end of the third layer 3D. The third layer 3D has a region where the thickness increases from the one end toward the other end of the third layer 3D. The third layer 3D has a portion where the increment in thickness decreases in the region where the thickness increases from the one end toward the other end of the third layer 3D. The sectional shape in the thickness direction of the third layer 3D is a wedge-like shape.

In the fourth layer 4D, the thickness at the one end of the fourth layer 4D is smaller than the thickness at the other end of the fourth layer 4D. The fourth layer 4D has a region where the thickness increases from the one end toward the other end of the fourth layer 4D. The fourth layer 4D has a portion where the increment in thickness increases in the region where the thickness increases from the one end toward the other end of the fourth layer 4D. The sectional shape in the thickness direction of the fourth layer 4D is a wedge-like shape.

In the fifth layer 5D, the thickness at the one end of the fifth layer 5D is smaller than the thickness at the other end of the fifth layer 5D. The fifth layer 5D has a region where the thickness increases from the one end toward the other end of the fifth layer 5D. The fifth layer 5D has a portion where the increment in thickness increases in the region where the thickness increases from the one end toward the other end of the fifth layer 5D. The sectional shape in the thickness direction of the fifth layer 5D is a wedge-like shape.

The maximum thickness position (X1) of the interlayer film 11D within a region of 0.1X to 0.9X from the one end 11a toward the other end 11b of the interlayer film 11D is a position of 0.9X from the one end 11a toward the other end 11b. The minimum thickness position (X2) of the interlayer film 11D within a region of 0.1X to 0.9X from the one end 11a toward the other end 11b of the interlayer film 11D is a position of 0.1X from the one end 11a toward the other end 11b.

Fig. 6 is a sectional view schematically showing an interlayer film for laminated glass in accordance with a sixth embodiment of the present invention. In Fig. 6, a cross section in the thickness direction of the interlayer film 11E is shown.

The interlayer film 11E has one end 11a, and the other end 11b. In the interlayer film 11E, the thickness of the one end 11a is smaller than the thickness of the other end 11b. The interlayer film 11E has a region where the thickness increases from the one end 11a toward the other end 11b.

The interlayer film 11E includes a first layer 1E, a second layer 2E, a third layer 3E, a fourth layer 4E, and a fifth layer 5E. The interlayer film 11E has a five-layer structure. The first layer 1E has a first surface and a second surface. The first surface and the second surface in the first layer 1E are surfaces facing to each other. The fourth layer 4E is arranged on a first surface side of the first layer 1E and to be layered thereon. The fifth layer 5E is arranged on a second surface side of the first layer 1E and to be layered thereon. The second layer 2E is arranged on a surface side opposite to the first layer 1E side of the fourth layer 4E and to be layered thereon. The third layer 3E is arranged on a surface side opposite to the first layer 1E side of the fifth layer 5E and to be layered thereon. The first layer 1E, the fourth layer 4E and the fifth layer 5E are intermediate layers. Each of the second layer 2E and the third layer 3E is a surface layer.

In the first layer 1E, the thickness at the one end of the first layer 1E is smaller than the thickness at the other end of the first layer 1E. The first layer 1E has a region where the thickness increases from the one end toward the other end of the first layer 1E. The first layer 1E has a portion where the increment in thickness increases in the region where the thickness increases from the one end toward the other end of the first layer 1E. The sectional shape in the thickness direction of the first layer 1E is a wedge-like shape.

In the second layer 2E, the thickness at the one end of the second layer 2E is larger than the thickness at the other end of the second layer 2E. The second layer 2E has a region where the thickness decreases from the one end toward the other end of the second layer 2E. The second layer 2E has a portion where the decrement in thickness increases in the region where the thickness decreases from the one end toward the other end of the second layer 2E. The sectional shape in the thickness direction of the second layer 2E is a wedge-like shape.

In the third layer 3E, the thickness at the one end of the third layer 3E is larger than the thickness at the other end of the third layer 3E. The third layer 3E has a region where the thickness decreases from the one end toward the other end of the third layer 3E. The third layer 3E has a portion where the decrement in thickness increases in the region where the thickness decreases from the one end toward the other end of the third layer 3E. The sectional shape in the thickness direction of the third layer 3E is a wedge-like shape.

In the fourth layer 4E, the thickness at the one end of the fourth layer 4E is smaller than the thickness at the other end of the fourth layer 4E. The fourth layer 4E has a region where the thickness increases from the one end toward the other end of the fourth layer 4E. The fourth layer 4E has a portion where the increment in thickness increases in the region where the thickness increases from the one end toward the other end of the fourth layer 4E. The sectional shape in the thickness direction of the fourth layer 4E is a wedge-like shape.

In the fifth layer 5E, the thickness at the one end of the fifth layer 5E is smaller than the thickness at the other end of the fifth layer 5E. The fifth layer 5E has a region where the thickness increases from the one end toward the other end of the fifth layer 5E. The fifth layer 5E has a portion where the increment in thickness increases in the region where the thickness increases from the one end toward the other end of the fifth layer 5E. The sectional shape in the thickness direction of the fifth layer 5E is a wedge-like shape.

The maximum thickness position (X1) of the interlayer film 11E within a region of 0.1X to 0.9X from the one end 11a toward the other end 11b of the interlayer film 11E is a position of 0.9X from the one end 11a toward the other end 11b. The minimum thickness position (X2) of the interlayer film 11E within a region of 0.1X to 0.9X from the one end 11a toward the other end 11b of the interlayer film 11E is a position of 0.1X from the one end 11a toward the other end 11b.

Hereinafter, details of each layer constituting the interlayer film according to the present invention, and details of each ingredient contained in each layer are described.

(Heat shielding substance)

The interlayer film contains a heat shielding substance. The first layer may contain a heat shielding substance, and need not contain a heat shielding substance. The second layer may contain a heat shielding substance, and need not contain a heat shielding substance. The third layer may contain a heat shielding substance, and need not contain a heat shielding substance. The fourth layer may contain a heat shielding substance, and need not contain a heat shielding substance. The fifth layer may contain a heat shielding substance, and need not contain a heat shielding substance. The interlayer film includes a layer containing a heat shielding substance (heat shielding layer). The first layer may be a heat shielding layer, and need not be a heat shielding layer. The second layer may be a heat shielding layer, and need not be a heat shielding layer. The third layer may be a heat shielding layer, and need not be a heat shielding layer. The fourth layer may be a heat shielding layer, and need not be a heat shielding layer. The fifth layer may be a heat shielding layer, and need not be a heat shielding layer. The heat shielding layer contains a heat shielding substance. One kind of the heat shielding substance may be used alone, and two or more kinds thereof may be used in combination.

The heat shielding substance is also an ingredient that absorbs a relatively large quantity of light with wavelengths outside the visible light region.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

In 100% by weight of the interlayer film, or in 100% by weight of the layer containing the heat shielding substance (the first layer, the second layer, the third layer, the fourth layer, or the fifth layer), the content of the heat shielding substance is preferably 0.001% by weight or more, more preferably 0.005% by weight or more, more preferably 0.01% by weight or more, still more preferably 0.1% by weight or more, further preferably 1% by weight or more, especially preferably 1.5% by weight or more, and is preferably 6% by weight or less, more preferably 5.5% by weight or less, further preferably 4% by weight or less, especially preferably 3.5% by weight or less, most preferably 3% by weight or less. When the content of the heat shielding substance is the above lower limit or more and the above upper limit or less, the heat shielding property is sufficiently enhanced and the visible light transmittance is sufficiently enhanced.

Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. It is preferred that the fourth layer contain the Ingredient X. It is preferred that the fifth layer contain the Ingredient X. It is preferred that the heat shielding layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of the layer containing the Ingredient X (the first layer, the second layer, the third layer, the fourth layer, or the fifth layer), the content of the Ingredient X is preferably 0.001% by weight or more, more preferably 0.005% by weight or more, further preferably 0.01% by weight or more, and especially preferably 0.02% by weight or more and is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. It is preferred that the fourth layer contain the heat shielding particles. It is preferred that the fifth layer contain the heat shielding particles. It is preferred that the heat shielding layer contain the heat shielding particles. The heat shielding particles are a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particles be particles of a metal oxide (metal oxide particles).

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles (CWO particles), thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less, more preferably 0.05 μm or less. When the average particle diameter is the aforementioned lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, a third layer, a fourth layer, or a fifth layer), a content of the heat shielding particles (in particular, the content of tungsten oxide particles) is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3% by weight or less. When the content of the heat shielding particles is the above lower limit or more and the above upper limit or less, the heat shielding property is sufficiently enhanced and the visible light transmittance is sufficiently enhanced.

Other details of heat shielding substance:

It is preferred that the heat shielding substance contained in the interlayer film be a vanadium phthalocyanine compound, ITO particles, or CWO particles. In this case, it is possible to further enhance the heat shielding performance of laminated glass.

A distance from the first outer surface to the second outer surface of the interlayer film is referred to as t. From the viewpoint of enhancing the heat shielding performance, it is preferred that the heat shielding substance exist in a region of 0t to 0.2t from the first outer surface toward the second outer surface. From the viewpoint of enhancing the adhesion stability between the interlayer film and lamination glass members, it is preferred that the heat shielding substance exist in a region of more than 0.2t to 0.4t from the first outer surface toward the second outer surface. From the viewpoint of enhancing the adhesion stability between the interlayer film and lamination glass members, it is preferred that the heat shielding substance exist in a region of more than 0.4t to 0.5t from the first outer surface toward the second outer surface.

From the viewpoint of further enhancing the heat shielding performance, it is preferred that concentration of the heat shielding substance be 0.2% by weight or less in a region of 0t to 0.2t from the first outer surface toward the second outer surface. From the viewpoint of enhancing the adhesion stability between the interlayer film and lamination glass members, it is preferred that concentration of the heat shielding substance be 0.2% by weight or less in a region of more than 0.2t to 0.4t from the first outer surface toward the second outer surface. From the viewpoint of enhancing the adhesion stability between the interlayer film and lamination glass members, it is preferred that concentration of the heat shielding substance be 0.2% by weight or less in a region of more than 0.4t to 0.59t from the first outer surface toward the second outer surface.

From the viewpoint of further enhancing the heat shielding performance, it is preferred that the heat shielding substance exist at the highest concentration on the basis of % by weight in a region of 0t to 0.2t from the first outer surface toward the second outer surface in a region of 0t to 1.0t from the first outer surface toward the second outer surface. From the viewpoint of enhancing the adhesion stability between the interlayer film and lamination glass members, it is preferred that the heat shielding substance exist at the highest concentration on the basis of % by weight in a region of 0.41t to 0.59t from the first outer surface toward the second outer surface in a region of 0t to 1.0t from the first outer surface toward the second outer surface. It is preferred that a content of the heat shielding substance in a region of 0.41t to 0.59t from the first outer surface toward the second outer surface be larger than a content of the heat shielding substance in a region of 0t to 0.41t from the first outer surface toward the second outer surface on the basis of % by weight. It is preferred that a content of the heat shielding substance in a region of 0.41t to 0.59t from the first outer surface toward the second outer surface be larger than a content of the heat shielding substance in a region of 0.59t to 1t from the first outer surface toward the second outer surface on the basis of % by weight.

In the heat shielding layer (containing a heat shielding substance and having a glass transition point of 15°C or more), it is preferred that the heat shielding substance have a concentration distribution in the thickness direction. In the heat shielding layer, it is preferred that the heat shielding substance do not exist uniformly. In this case, it becomes easy to satisfy the formula (1), and the effect of the present invention can be exerted more effectively.

The heat shielding layer preferably has a region having a concentration of the heat shielding substance of 0.01% by weight or more, more preferably has a region having a concentration of the heat shielding substance of 0.02% or more, further preferably has a region having a concentration of the heat shielding substance of 0.03% or more, and preferably has a region having a concentration of the heat shielding substance of 5% by weight or less, more preferably has a region having a concentration of the heat shielding substance of 3% by weight or less in the thickness direction. In this case, it becomes easy to satisfy the formula (1), and the effect of the present invention can be exerted more effectively.

In the heat shielding layer, an absolute value of difference between a concentration of the heat shielding substance at a region where the concentration of the heat shielding substance is highest, and a concentration of the heat shielding substance at a region where the concentration of the heat shielding substance is lowest in the thickness direction be preferably 0.01% or more, more preferably 0.02% by weight or more, further preferably 0.03% by weight or more, and be preferably 5% by weight or less. In this case, it becomes easy to satisfy the formula (1), and the effect of the present invention can be exerted more effectively.

In the thickness direction of the maximum thickness position (X1) of the interlayer film within a region of 0.1X to 0.9X from the one end toward the other end of the interlayer film, a concentration of the heat shielding substance in the heat shielding layer is preferably 0.001% by weight or more, more preferably 0.003% by weight or more, further preferably 0.005% by weight or more, still more preferably 0.007% by weight or more, and is preferably 4% by weight or less, more preferably 2% by weight or less, further preferably 1.5% by weight or less. When the concentration of the heat shielding substance is the above lower limit or more and the above upper limit or less, it becomes easy to satisfy the formula (1), and it is possible to exert the effect of the present invention more effectively.

In the thickness direction of the maximum thickness position of the interlayer film, the concentration of the heat shielding substance in the heat shielding layer is preferably 0.001% by weight or more, more preferably 0.003% by weight or more, further preferably 0.005% by weight or more, still further preferably 0.007% by weight or more, and is preferably 4% by weight or less, more preferably 2% by weight or less, further preferably 1.5% by weight or less. When the concentration of the heat shielding substance is the above lower limit or more and the above upper limit or less, it becomes easy to satisfy the formula (1), and it is possible to exert the effect of the present invention more effectively.

In the thickness direction of the maximum thickness position (X1) of the interlayer film within a region of 0.1X to 0.9X from the one end toward the other end of the interlayer film, a concentration of the heat shielding substance in the heat shielding layer is preferably 0.001% by weight or more, more preferably 0.003% by weight or more, further preferably 0.005% by weight or more, still more preferably 0.007% by weight or more, and is preferably 4% by weight or less, more preferably 2% by weight or less, further preferably 1.5% by weight or less. When the concentration of the heat shielding substance is the above lower limit or more and the above upper limit or less, it becomes easy to satisfy the formula (1), and it is possible to exert the effect of the present invention more effectively.

In the thickness direction of the maximum thickness position of the heat shielding layer, the concentration of the heat shielding substance in the heat shielding layer is preferably 0.001% by weight or more, more preferably 0.003% by weight or more, further preferably 0.005% by weight or more, still further preferably 0.007% by weight or more, and is preferably 4% by weight or less, more preferably 2% by weight or less, further preferably 1.5% by weight or less. When the concentration of the heat shielding substance is the above lower limit or more and the above upper limit or less, it becomes easy to satisfy the formula (1), and it is possible to exert the effect of the present invention more effectively.

In the thickness direction of the maximum thickness position of the heat shielding layer within a region of 0.1X to 0.9X from the one end toward the other end of the interlayer film, a concentration of the heat shielding substance in the heat shielding layer is preferably 0.001% by weight or more, more preferably 0.003% by weight or more, further preferably 0.005% by weight or more, still more preferably 0.007% by weight or more, and is preferably 4% by weight or less, more preferably 2% by weight or less, further preferably 1.5% by weight or less. When the concentration of the heat shielding substance is the above lower limit or more and the above upper limit or less, it becomes easy to satisfy the formula (1), and it is possible to exert the effect of the present invention more effectively.

In the thickness direction of the maximum thickness position of the interlayer film, a concentration of the heat shielding substance in the interlayer film is referred to as a concentration (1). In the thickness direction of the minimum thickness position of the interlayer film, a concentration of the heat shielding substance in the interlayer film is referred to as a concentration (2). An absolute value of difference between the concentration (1) and the concentration (2) is preferably 0.01% by weight or more, more preferably 0.02% by weight or more, further preferably 0.03% by weight or more, and is preferably 5% by weight or less, more preferably 3% by weight or less. When the absolute value of difference is the above lower limit or more and the above upper limit or less, it becomes easy to satisfy the formula (1), and it is possible to exert the effect of the present invention more effectively.

A concentration of the heat shielding substance in the interlayer film is referred to as a concentration (X1) in the thickness direction of the maximum thickness position (X1) of the interlayer film within a region of 0.1X to 0.9X from the one end toward the other end of the interlayer film. A concentration of the heat shielding substance in the interlayer film is referred to as a concentration (X2) in the thickness direction of the minimum thickness position (X2) of the interlayer film within a region of 0.1X to 0.9X from the one end toward the other end of the interlayer film. An absolute value of difference between the concentration (X1) and the concentration (X2) is preferably 0.01% by weight or more, more preferably 0.02% by weight or more, further preferably 0.03% by weight or more, and is preferably 5% by weight or less, more preferably 3% by weight or less. When the absolute value of difference is the above lower limit or more and the above upper limit or less, it becomes easy to satisfy the formula (1), and it is possible to exert the effect of the present invention more effectively.

It is preferred that the layer having a glass transition point of less than 15°C contain a heat shielding substance. In this case, it is possible to further enhance the heat shielding property of laminated glass.

In 100% by weight of the layer having a glass transition point of less than 15°C, a content of the heat shielding substance is preferably 0.01% by weight or more, more preferably 0.02% by weight or more, further preferably 0.03% by weight or more, still further preferably 0.05% by weight or more, and is preferably 5% by weight or less, more preferably 3% by weight or less. When the content of the heat shielding substance is the above lower limit or more and the above upper limit or less, the heat shielding property is sufficiently enhanced and the visible light transmittance is sufficiently enhanced.

The interlayer film may contain only one kind of the heat shielding substance, may contain two kinds of the heat shielding substances, may contain three kinds of the heat shielding substances, and may contain three or more kinds of the heat shielding substances. The interlayer film may contain ten or less kinds of the heat shielding substances, and may contain five or less kinds of the heat shielding substances.

In 100% by weight of the interlayer film, a content of the heat shielding substance (total content of the heat shielding substances) is preferably 0.001% by weight or more, more preferably 0.002% by weight or more, further preferably 0.005% by weight or more, still further preferably 0.01% by weight or more, and is preferably 2.0% by weight or less, more preferably 1.0% by weight or less. In this case, it becomes easy to satisfy the formula (1), and the effect of the present invention can be exerted more effectively.

When the interlayer film contains two or more kinds of the heat shielding substances, a content of at least one kind of the heat shielding substances in 100% by weight of the interlayer film is preferably 0.001% by weight or more, more preferably 0.005% by weight or more, and is preferably 1.0% by weight or less. In this case, it becomes easy to satisfy the formula (1), and the effect of the present invention can be exerted more effectively.

When the interlayer film contains two or more kinds of the heat shielding substances, a content of each of the two or more kinds of the heat shielding substances in 100% by weight of the interlayer film is preferably 0.001% by weight or more, more preferably 0.005% by weight or more, and is preferably 1.0% by weight or less. In this case, it becomes easy to satisfy the formula (1), and the effect of the present invention can be exerted more effectively.

(Coloring agent)

It is preferred that the interlayer film contain a coloring agent. The first layer may contain or need not contain a coloring agent. The second layer may contain or need not contain a coloring agent. The third layer may contain or need not contain a coloring agent. The fourth layer may contain or need not contain a coloring agent. The fifth layer may contain or need not contain a coloring agent. The heat shielding layer may contain and need not contain a coloring agent. It is preferred that the interlayer film include a layer containing a coloring agent (colored layer). The first layer may be a colored layer, and need not be a colored layer. The second layer may be a colored layer, and need not be a colored layer. The third layer may be a colored layer, and need not be a colored layer. The fourth layer may be a colored layer, and need not be a colored layer. The fifth layer may be a colored layer, and need not be a colored layer. The coloring agent is different from the heat shielding substance.

It is preferred that the coloring agent be an ingredient capable of adjusting color coordinate L*, a* or b* in L*a*b* color system by being contained in the interlayer film. Examples of the coloring agent include a dye, a pigment, and the like.

Examples of the dye include a pyrene-based dye, an aminoketone-based dye, an anthraquinone-based dye, and an azo-based dye, and the like. One kind of the dye may be used alone, and two or more kinds thereof may be used in combination.

Examples of the pyrene-based dye include Solvent Green 5 (CAS79869-59-3) and Solvent Green 7 (CAS6358-69-6), and the like.

Examples of the aminoketone-based dye include Solvent Yellow 98 (CAS12671-74-8), Solvent Yellow 85 (CAS12271-01-1) and Solvent Red 179 (CAS8910-94-5), and Solvent Red 135 (CAS71902-17-5), and the like.

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6) and Disperse Blue 214 (CAS104491-84-1), and the like.

Examples of the azo-based dye include Solvent Yellow30 (CAS3321-10-4), Solvent Red 164 (CAS70956-30-8), and Disperse Blue 146 (CAS88650-91-3), and the like.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound and a dioxazine compound, and the like.

From the viewpoint of enhancing the design property, it is preferred that the coloring agent be a dye or a pigment. It is preferred that the interlayer film contain a dye or a pigment.

In 100% by weight of the layer containing the coloring agent, a content of the coloring agent is preferably 0.0001% by weight or more, more preferably 0.0003% by weight or more, and is preferably 1% by weight or less, more preferably 0.7% by weight or less, further preferably 0.5% by weight or less. When the content of the coloring agent is the above lower limit or more and the above upper limit or less, it is possible to keep a high Tv value. When the content of the coloring agent is the above upper limit or less, it is possible to control the haze of the laminated glass lower.

(Thermoplastic resin)

It is preferred that the interlayer film contain a thermoplastic resin. It is preferred that the first layer contain a thermoplastic resin. It is preferred that the second layer contain a thermoplastic resin. It is preferred that the third layer contain a thermoplastic resin. It is preferred that the fourth layer contain a thermoplastic resin. It is preferred that the fifth layer contain a thermoplastic resin. It is preferred that the heat shielding layer contain a thermoplastic resin. One kind of the thermoplastic resin may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, a polyvinyl alcohol resin, and the like. Thermoplastic resins other than these may be used.

It is preferred that the interlayer film contain a polyvinyl acetal resin. It is preferred that the first layer contain a polyvinyl acetal resin. It is preferred that the second layer contain a polyvinyl acetal resin. It is preferred that the third layer contain a polyvinyl acetal resin. It is preferred that the fourth layer contain a polyvinyl acetal resin. It is preferred that the fifth layer contain a polyvinyl acetal resin. It is preferred that the heat shielding layer contain a polyvinyl acetal resin. It is preferred that the thermoplastic resin contained in the interlayer film be a polyvinyl acetal resin. One kind of the polyvinyl acetal resin may be used alone and two or more kinds thereof may be used in combination.

In 100% by weight of the thermoplastic resin contained in each layer (the first layer, the second layer, the third layer, the fourth layer, the fifth layer or the heat shielding layer) constituting the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more, and is preferably 100% by weight or less. It is preferred that the main ingredient (50% by weight or more) of the thermoplastic resin in each layer constituting the interlayer film be a polyvinyl acetal resin.

(Plasticizer)

From the viewpoint of further enhancing the adhesive force of an interlayer film, it is preferred that the interlayer film contain a plasticizer. It is preferred that the first layer contain a plasticizer. It is preferred that the second layer contain a plasticizer. It is preferred that the third layer contain a plasticizer. It is preferred that the fourth layer contain a plasticizer. It is preferred that the fifth layer contain a plasticizer. It is preferred that the heat shielding layer contain a plasticizer. When the thermoplastic resin contained in the interlayer film is a polyvinyl acetal resin, it is especially preferred that the interlayer film (each layer) contain a plasticizer. It is preferred that a layer containing a polyvinyl acetal resin contain a plasticizer. One kind of the plasticizer may be used alone, and two or more kinds thereof may be used in combination.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

The content of the plasticizer in the interlayer film relative to 100 parts by weight of the thermoplastic resin in the interlayer film is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content of the plasticizer is the above lower limit or more, the penetration resistance of laminated glass is further enhanced. When the content of the plasticizer is the above upper limit or less, the transparency of the interlayer film is further enhanced.

(Other ingredients)

Each of the interlayer film, the first layer, the second layer, the third layer, the fourth layer, the fifth layer and the heat shielding layer may contain other ingredients than the above-described ingredients as necessary. Examples of other ingredients include an ultraviolet absorber, an oxidation inhibitor, a coupling agent, a dispersant, a surfactant, a fire retardant, an antistatic agent, an adhesion adjusting agent (alkali metal salt and alkali earth metal salt and so on), a moisture-proofing agent, a fluorescent brightener, and an infrared absorber, and the like. One kind of these other ingredients may be used alone, and two or more kinds thereof may be used in combination.

(Other details of interlayer film for laminated glass)

As described above, one end in each layer of the interlayer film corresponds to one end of the interlayer film, and the other end in each layer of the interlayer film corresponds to the other end of the interlayer film.

In the first layer, the thickness of the one end and the thickness of the other end may be the same, the thickness of the one end may be smaller than the thickness of the other end, and the thickness of the one end may be larger than the thickness of the other end.

The first layer may have a region where the thickness increases or may have a region where the thickness decreases from the one end toward the other end of the first layer. The first layer may have a region where the thickness increases and a region where the thickness decreases from the one end toward the other end of the first layer.

The first layer may have a portion where the increment in thickness increases or may have a portion where the increment in thickness decreases in the region where the thickness increases from the one end toward the other end of the first layer. In the first layer, the increment in thickness may be constant from the one end toward the other end of the first layer.

The first layer may have a portion where the decrement in thickness increases or may have a portion where the decrement in thickness decreases in the region where the thickness decreases from the one end toward the other end of the first layer. In the first layer, the decrement in thickness may be constant from the one end toward the other end of the first layer.

The sectional shape in the thickness direction of the first layer may be a rectangular shape, or may be a wedge-like shape.

In the second layer, the thickness of the one end and the thickness of the other end may be the same, the thickness of the one end may be smaller than the thickness of the other end, and the thickness of the one end may be larger than the thickness of the other end.

The second layer may have a region where the thickness increases or may have a region where the thickness decreases from the one end toward the other end of the second layer. The second layer may have a region where the thickness increases and a region where the thickness decreases from the one end toward the other end of the second layer.

The second layer may have a portion where the increment in thickness increases or may have a portion where the increment in thickness decreases in the region where the thickness increases from the one end toward the other end of the second layer. In the second layer, the increment in thickness may be constant from the one end toward the other end of the second layer.

The second layer may have a portion where the decrement in thickness increases or may have a portion where the decrement in thickness decreases in the region where the thickness decreases from the one end toward the other end of the second layer. In the second layer, the decrement in thickness may be constant from the one end toward the other end of the second layer.

The sectional shape in the thickness direction of the second layer may be a rectangular shape, or may be a wedge-like shape.

In the third layer, the thickness of the one end and the thickness of the other end may be the same, the thickness of the one end may be smaller than the thickness of the other end, and the thickness of the one end may be larger than the thickness of the other end.

The third layer may have a region where the thickness increases or may have a region where the thickness decreases from the one end toward the other end of the third **layer.** The third layer may have a region where the thickness increases and a region where the thickness decreases from the one end toward the other end of the third **layer.**

The third layer may have a portion where the increment in thickness increases or may have a portion where the increment in thickness decreases in the region where the thickness increases from the one end toward the other end of the third layer. In the third layer, the increment in thickness may be constant from the one end toward the other end of the third layer.

The third layer may have a portion where the decrement in thickness increases or may have a portion where the decrement in thickness decreases in the region where the thickness decreases from the one end toward the other end of the third layer. In the third layer, the decrement in thickness may be constant from the one end toward the other end of the third layer.

The sectional shape in the thickness direction of the third layer may be a rectangular shape, or may be a wedge-like shape.

In the fourth layer, the thickness of the one end and the thickness of the other end may be the same, the thickness of the one end may be smaller than the thickness of the other end, and the thickness of the one end may be larger than the thickness of the other end.

The fourth layer may have a region where the thickness increases or may have a region where the thickness decreases from the one end toward the other end of the fourth layer. The fourth layer may have a region where the thickness increases and a region where the thickness decreases from the one end toward the other end of the fourth layer.

The fourth layer may have a portion where the increment in thickness increases or may have a portion where the increment in thickness decreases in the region where the thickness increases from the one end toward the other end of the fourth layer. In the fourth layer, the increment in thickness may be constant from the one end toward the other end of the fourth layer.

The fourth layer may have a portion where the decrement in thickness increases or may have a portion where the decrement in thickness decreases in the region where the thickness decreases from the one end toward the other end of the fourth layer. In the fourth layer, the decrement in thickness may be constant from the one end toward the other end of the fourth layer.

The sectional shape in the thickness direction of the fourth layer may be a rectangular shape, or may be a wedge-like shape.

In the fifth layer, the thickness of the one end and the thickness of the other end may be the same, the thickness of the one end may be smaller than the thickness of the other end, and the thickness of the one end may be larger than the thickness of the other end.

The fifth layer may have a region where the thickness increases or may have a region where the thickness decreases from the one end toward the other end of the fifth layer. The fifth layer may have a region where the thickness increases and a region where the thickness decreases from the one end toward the other end of the fifth layer.

The fifth layer may have a portion where the increment in thickness increases or may have a portion where the increment in thickness decreases in the region where the thickness increases from the one end toward the other end of the fifth layer. In the fifth layer, the increment in thickness may be constant from the one end toward the other end of the fifth layer.

The fifth layer may have a portion where the decrement in thickness increases or may have a portion where the decrement in thickness decreases in the region where the thickness decreases from the one end toward the other end of the fifth layer. In the fifth layer, the decrement in thickness may be constant from the one end toward the other end of the fifth layer.

The sectional shape in the thickness direction of the fifth layer may be a rectangular shape, or may be a wedge-like shape.

In the heat shielding layer, the thickness of the one end and the thickness of the other end may be the same, the thickness of the one end may be smaller than the thickness of the other end, and the thickness of the one end may be larger than the thickness of the other end.

The heat shielding layer may have a region where the thickness increases or may have a region where the thickness decreases from the one end toward the other end of the heat shielding layer. The heat shielding layer may have a region where the thickness increases and a region where the thickness decreases from the one end toward the other end of the heat shielding layer.

The heat shielding layer may have a portion where the increment in thickness increases or may have a portion where the increment in thickness decreases in the region where the thickness increases from the one end toward the other end of the heat shielding layer. In the heat shielding layer, the increment in thickness may be constant from the one end toward the other end of the heat shielding layer.

The heat shielding layer may have a portion where the decrement in thickness increases or may have a portion where the decrement in thickness decreases in the region where the thickness decreases from the one end toward the other end of the heat shielding layer. In the heat shielding layer, the decrement in thickness may be constant from the one end toward the other end of the heat shielding layer.

The sectional shape in the thickness direction of the heat shielding layer may be a rectangular shape, or may be a wedge-like shape.

The interlayer film may be wound to be formed into a roll body of the interlayer film. The roll body may include a winding core and an interlayer film wound on the outer periphery of the winding core.

The method for producing the interlayer film is not particularly limited. In the case of a single-layered interlayer film, examples of the production method of the interlayer film include a method of extruding a resin composition with an extruder. One exemplary method for forming the interlayer film in the case of a multi-layered interlayer film includes separately forming layers by using resin compositions for forming respective layers, and then layering the obtained layers. Further, as a method for producing the interlayer film, a method of layering layers by co-extruding resin compositions for forming respective layers using an extruder can be recited. A production method of extrusion-molding is preferred because the method is suitable for continuous production.

Examples of the method of layering layers by co-extrusion include a method of joining materials for forming layers of the interlayer film that are molten in one or a plurality of extruders, with a die, and a method of joining layers of the interlayer film by a feed block. From the viewpoint of excellently producing the interlayer film satisfying the formula (1), it is preferred that the method for producing interlayer film include a step of joining materials for forming layers of the interlayer film that are molten in one or a plurality of extruders, with a die, or a step of joining layers of the interlayer film with a feed block. By changing the resin flow rate distribution or changing the resin flow rate of each layer by adjusting the resin pressure of each layer before joining the layers by co-extrusion, it is possible to form a layer shape having a predetermined thickness, and it is possible to excellently produce an interlayer film satisfying the formula (1). As a specific method for adjusting the flow rate, a method of changing the gap of the flow channel, a method of changing the flow channel length and so on can be recited. From the viewpoint of excellently producing an interlayer film satisfying the formula (1), it is preferred that the flow rate of the molten resin containing a heat shielding substance in the site where the thickness of the obtained interlayer film is large be relatively small, compared with that of other site. In the case of forming the interlayer film having a three or more-layer structure by co-extrusion, it is sometimes the case that after branching the molten resin supplied from one extruder, the layers are joined again to form two or more resin layers. As a method of branching a molten resin by co-extrusion, branching with the molten resin transporting tube, branching with a feed block internal flow channel, and branching with a die internal flow channel, and the like can be recited. In the co-extrusion, the flow channel diameter and shape of the molten resin transporting tube need not be all equivalent, or may be all equivalent. In co-extrusion, only one extruder may be used, and a plurality of extruders may be used.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

From the viewpoint of improving the degassability at the time of laminating the interlayer film and a lamination glass member, and uniformity of the roughness distribution, it is preferred that the interlayer film have uneven surface imparted by an emboss roll method or a melt fracture method.

A ten-point average roughness (Rz) of the uneven surface is preferably 1 $\mu$m or more, more preferably 5 $\mu$m or more, further preferably 10 $\mu$m or more, still further preferably 15 $\mu$m or more, especially preferably 20 $\mu$m or more, and is preferably 100 $\mu$m or less, more preferably 90 $\mu$m or less, further preferably 80 $\mu$m or less, especially preferably 70 $\mu$m or

less, most preferably 60 μm or less. When the ten-point average roughness (Rz) is the above lower limit or more and the above upper limit or less, it is possible to improve the degassability at the time of press-bonding between the interlayer film and a lamination glass member.

The ten-point average roughness (Rz) of the uneven surface is measured in accordance with JIS B0601:1994. As a measuring device for measuring the ten-point average roughness (Rz), for example, "Surfcorder SE300" available from Kosaka Laboratory Ltd. or the like may be used. More specifically, the ten-point average roughness (Rz) can be measured using a stylus having a tip radius of 2 μm and a tip angle of 60° in measurement conditions of a cutoff value at the time of measurement of 2.5 mm, a standard length 2.5 mm, a measurement length of 12.5 mm, a spare length 2.5 mm, and a feed speed of stylus of 0.5 mm/second in an environment of 23°C and 30 RH%. When embossing in the form of engraved lines is given on the surface of the interlayer film, the ten-point average roughness (Rz) is measured by feeding a stylus perpendicularly to the line direction of the engraved lines.

A ratio of an average thickness of the layer having a glass transition point of less than 15°C as a whole, to an average thickness of the interlayer film (average thickness of the layer having a glass transition point of less than 15°C as a whole/average thickness of the interlayer film) is preferably 0.03 or more, more preferably 0.05 or more, further preferably 0.07 or more, and is preferably 0.3 or less, more preferably 0.25 or less. When the ratio (average thickness of the layer having a glass transition point of less than 15°C as a whole/average thickness of the interlayer film) is the above lower limit or more and the above upper limit or less, it is possible to further enhance the sound insulating performance.

(Laminated glass)

A laminated glass according to the present invention includes a first lamination glass member, a second lamination glass member and the interlayer film described above. In the laminated glass according to the present invention, the interlayer film is arranged between the first lamination glass member and the second lamination glass member.

The laminated glass may be a head-up display. When the laminated glass is a head-up display, the laminated glass has a display region of the head-up display. The display region is a region on which information can be favorably displayed.

A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The sectional shape of the first lamination glass member may be a rectangular shape, or may be a wedge-like shape. The sectional shape of the second lamination glass member may be a rectangular shape, or may be a wedge-like shape.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

(Thermoplastic resin)

Polyvinyl acetal resin (1): Polyvinyl butyral resin: average polymerization degree: 1700, content of hydroxyl group: 30% by mole, acetylation degree: 1% by mole, acetalization degree (butyralization degree): 69% by mole. Polyvinyl acetal resin (2): Polyvinyl butyral resin: average polymerization degree: 3000, content of hydroxyl group: 22% by mole, acetylation degree: 13% by mole, acetalization degree (butyralization degree): 65% by mole

(Plasticizer)

3GO: Triethylene glycol di-2-ethylhexanoate

(Heat shielding substance)

  43V: Vanadium phthalocyanine compound ("NIR-43V" available from YAMADA CHEMICAL CO., LTD,)
  ITO: Tin-doped indium oxide particles
  CWO: Cesium-doped tungsten oxide particles

(Ultraviolet absorber)

Tinuvin326: 2-(2'-hydroxy-3'-t-butyl-5-methylphenyl)-5-chlorobenzotriazole ("Tinuvin 326" available from BASF Japan Ltd.)

(Oxidation inhibitor)

BHT: 2,6-di-t-butyl-p-cresol

In the following Examples and Comparative Examples, ingredients were blended in blending amounts shown in the following Tables 4 to 6, and co-extruded by using a co-extruder, and the extruded materials were joined with a feed block (FB) or a die to prepare an interlayer film. In Tables 4 to 6, the content of the plasticizer (3GO) is a content relative to 100 parts by weight of polyvinyl acetal resin, and the content of other ingredient than the plasticizer is a content in 100% by weight of the material.

[Table 4]

| Extruder | Extruder A | | | | | | | |
|---|---|---|---|---|---|---|---|---|
| Input matter | Polyvinyl acetal resin | | 3GO | Tinuvin 326 | BHT | ITO | CWO | 43V |
| Unit | Kind | parts by weight | parts by weight | % by weight | % by weight | % by weight | % by weight | % by weight |
| Comparative Example 1 | (1) | 100 | 36.8 | 0.2 | 0.2 | 0 | 0.15 | 0 |
| Example 1 | (1) | 100 | 36.8 | 0.2 | 0.2 | 0 | 0.190 | 0 |
| Comparative Example 2 | (1) | 100 | 36.8 | 0.2 | 0.2 | 0.1 | 0.1 | 0 |
| Example 2 | (1) | 100 | 36.8 | 0.2 | 0.2 | 0.127 | 0.127 | 0 |
| Example 3 | (1) | 100 | 36.8 | 0.2 | 0.2 | 0.255 | 0.255 | 0 |
| Example 4 | (1) | 100 | 36.8 | 0.2 | 0.2 | 0.139 | 0.139 | 0 |
| Example 5 | (1) | 100 | 36.8 | 0.2 | 0.2 | 0.139 | 0.139 | 0 |
| Example 6 | (1) | 100 | 36.8 | 0.2 | 0.2 | 0.150 | 0.145 | 0 |
| Example 7 | (1) | 100 | 36.8 | 0.2 | 0.2 | 0.190 | 0.190 | 0 |
| Comparative Example 3 | (1) | 100 | 36.8 | 0.2 | 0.2 | 0.9 | 0 | 0 |
| Example 8 | (1) | 100 | 36.8 | 0.2 | 0.2 | 2.750 | 0 | 0 |
| Example 9 | (1) | 100 | 36.8 | 0.2 | 0.2 | 1.730 | 0 | 0 |
| Example 10 | (1) | 100 | 36.8 | 0.2 | 0.2 | 1.370 | 0 | 0 |
| Example 11 | (1) | 100 | 36.8 | 0.2 | 0.2 | 1.060 | 0 | 0 |
| Example 12 | (1) | 100 | 36.8 | 0.2 | 0.2 | 0.780 | 0 | 0 |
| Comparative Example 4 | (1) | 100 | 36.8 | 0.2 | 0.2 | 0.4 | 0.01 | 0.002 |
| Example 13 | (1) | 100 | 36.8 | 0.2 | 0.2 | 0.440 | 0.011 | 0.0022 |
| Example 14 | (1) | 100 | 36.8 | 0.2 | 0.2 | 0.440 | 0.011 | 0.0022 |
| Example 15 | (1) | 100 | 36.8 | 0.2 | 0.2 | 0.587 | 0.015 | 0.0029 |
| Example 16 | (1) | 100 | 36.8 | 0.2 | 0.2 | 0.528 | 0.013 | 0.0026 |

[Table 5]

| Extruder | Extruder B | | | | | | | |
|---|---|---|---|---|---|---|---|---|
| Input matter | Polyvinyl acetal resin | | 3GO | Tinuvin 326 | BHT | ITO | CWO | 43V |
| Unit | Kind | parts by weight | parts by weight | % by weight | % by weight | % by weight | % by weight | % by weight |
| Comparative Example 1 | - | - | - | - | - | - | - | - |
| Example 1 | (1) | 100 | 36.8 | 0.2 | 0.2 | 0 | 0 | 0 |
| Comparative Example 2 | - | - | - | - | - | - | - | - |
| Example 2 | (1) | 100 | 36.8 | 0.2 | 0.2 | 0 | 0 | 0 |
| Example 3 | (1) | 100 | 36.8 | 0.2 | 0.2 | 0 | 0 | 0 |
| Example 4 | (1) | 100 | 36.8 | 0.2 | 0.2 | 0 | 0 | 0 |
| Example 5 | (1) | 100 | 36.8 | 0.2 | 0.2 | 0 | 0 | 0 |
| Example 6 | (1) | 100 | 36.8 | 0.2 | 0.2 | 0.01 | 0 | 0 |
| Example 7 | (1) | 100 | 36.8 | 0.2 | 0.2 | 0 | 0 | 0 |
| Comparative Example 3 | (2) | 100 | 76 | 0.2 | 0.2 | 0 | 0 | 0 |

(continued)

| Extruder | Extruder B | | | | | | | |
|---|---|---|---|---|---|---|---|---|
| Input matter | Polyvinyl acetal resin | | 3GO | Tinuvin 326 | BHT | ITO | CWO | 43V |
| Unit | Kind | parts by weight | parts by weight | % by weight | % by weight | % by weight | % by weight | % by weight |
| Example 8 | (1) | 100 | 36.8 | 0.2 | 0.2 | 0 | 0 | 0 |
| Example 9 | (1) | 100 | 36.8 | 0.2 | 0.2 | 0 | 0 | 0 |
| Example 10 | (1) | 100 | 36.8 | 0.2 | 0.2 | 0 | 0 | 0 |
| Example 11 | (1) | 100 | 36.8 | 0.2 | 0.2 | 0 | 0 | 0 |
| Example 12 | (1) | 100 | 36.8 | 0.2 | 0.2 | 0 | 0 | 0 |
| Comparative Example 4 | (2) | 100 | 76 | 0.2 | 0.2 | 0 | 0 | 0 |
| Example 13 | (1) | 100 | 36.8 | 0.2 | 0.2 | 0 | 0 | 0 |
| Example 14 | (1) | 100 | 36.8 | 0.2 | 0.2 | 0 | 0 | 0 |
| Example 15 | (1) | 100 | 36.8 | 0.2 | 0.2 | 0 | 0 | 0 |
| Example 16 | (1) | 100 | 36.8 | 0.2 | 0.2 | 0 | 0 | 0 |

[Table 6]

| Extruder | Extruder C | | | | | | | |
|---|---|---|---|---|---|---|---|---|
| Input matter | Polyvinyl acetal resin | | 3GO | Tinuvin 326 | BHT | ITO | CWO | 43V |
| Unit | Kind | parts by weight | parts by weight | % by weight | % by weight | % by weight | % by weight | % by weight |
| Comparative Example 1 | - | - | - | - | - | - | - | - |
| Example 1 | - | - | - | - | - | - | - | - |
| Comparative Example 2 | - | - | - | - | - | - | - | - |
| Example 2 | - | - | - | - | - | - | - | - |
| Example 3 | - | - | - | - | - | - | - | - |
| Example 4 | - | - | - | - | - | - | - | - |
| Example 5 | - | - | - | - | - | - | - | - |
| Example 6 | (1) | 100 | 36.8 | 0.2 | 0.2 | 0.000 | 0.02 | 0 |
| Example 7 | - | - | - | - | - | - | - | - |
| Comparative Example 3 | - | - | - | - | - | - | - | - |
| Example 8 | (2) | 100 | 76 | 0 | 0 | 0 | 0 | 0 |
| Example 9 | (2) | 100 | 76 | 0 | 0 | 0 | 0 | 0 |
| Example 10 | (2) | 100 | 76 | 0.2 | 0.2 | 0 | 0 | 0 |
| Example 11 | (2) | 100 | 76 | 0 | 0 | 0 | 0 | 0 |
| Example 12 | (2) | 100 | 76 | 0 | 0 | 0 | 0.01 | 0 |
| Comparative Example 4 | - | - | - | - | - | - | - | - |
| Example 13 | (2) | 100 | 76 | 0 | 0 | 0 | 0 | 0 |
| Example 14 | (2) | 100 | 76 | 0 | 0 | 0 | 0 | 0 |
| Example 15 | (2) | 100 | 76 | 0 | 0 | 0 | 0 | 0 |

(continued)

| Extruder | Extruder C | | | | | | | |
|---|---|---|---|---|---|---|---|---|
| Input matter | Polyvinyl acetal resin | | 3GO | Tinuvin 326 | BHT | ITO | CWO | 43V |
| Unit | Kind | parts by weight | parts by weight | % by weight | % by weight | % by weight | % by weight | % by weight |
| Example 16 | (2) | 100 | 76 | 0 | 0 | 0 | 0 | 0 |

(Example 1)

Preparation of interlayer film:

Ingredients were blended in blending amounts shown in Tables 4 to 6, and co-extruded by using a co-extruder including an extruder A and an extruder B, and the extruded materials are joined by a feed block (FB) to prepare an interlayer film. Therefore, the obtained interlayer film is an interlayer film having a one-layer structure (first layer) (interlayer film having the shape shown in Fig. 1).

Preparation of laminated glass:

The obtained interlayer film was sandwiched between two sheets of 2-mm thick clear glass (300 mm long × 300 mm wide) conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass. The obtained laminated glass corresponds to the aforementioned laminated glass A.

(Examples 2 to 7)

An interlayer film having a one-layer structure (first layer) (interlayer film having the shape shown in Fig. 1) was obtained in the same manner as in Example 1 except that the kinds of materials were changed as shown in Tables 4 to 6, the extrusion amount ratio of extruders was changed, and the pressure distribution at the time of joining the materials was adjusted. Also, using the obtained interlayer film, laminated glass was prepared in the same manner as in Example 1. In Examples 6, an extruder was added in addition to the changes as described above.

(Comparative Examples 1, 2)

Materials shown in Tables 4 to 6 were coextruded by using an extruder. In this manner, an interlayer film having a one-layer structure (first layer) (interlayer film having the shape shown in Fig. 1) was obtained. While Fig. 1 is a sectional view schematically showing an interlayer film for laminated glass corresponding to the present invention as described above, Fig. 1 was referenced so as to promote understanding of the sectional shape of the interlayer films of Comparative Examples 1, 2 that do not correspond to the present invention in the preceding text and Tables. Also, using the obtained interlayer film, laminated glass was prepared in the same manner as in Example 1.

(Example 8)

Preparation of interlayer film:

Ingredients were blended in blending amounts shown in Tables 4 to 6, and co-extruded by using a co-extruder including an extruder A, an extruder B, and an extruder C and the extruded materials were joined with a die to prepare an interlayer film. The obtained interlayer film is an interlayer film having a three-layer structure (second layer/first layer/third layer) (interlayer film having the shape shown in Fig. 2). The second and third layers are formed from the material extruded by the extruder A and the material extruded by the extruder B, and the first layer is formed from the material extruded by the extruder C. Also, the material extruded by the extruder A is located on the outer surface side of the interlayer film in the second and third layers, and the material extruded by the extruder B is located on the first layer side in the second and third layers.

Preparation of laminated glass:

Laminated glass was prepared with the obtained interlayer film in the same manner as in Example 1.

(Example 9)

Ingredients were blended in blending amounts shown in Tables 4 to 6, and co-extruded by using a co-extruder including an extruder A, an extruder B, and an extruder C and the extruded materials are joined by a feed block (FB) to prepare an interlayer film. The obtained interlayer film is an interlayer film having a three-layer structure (second layer/first layer/third layer) (interlayer film having the shape shown in Fig. 2). The second and third layers are formed from the material extruded by the extruder A and the material extruded by the extruder B, and the first layer is formed from the material extruded by the extruder C. Also, the material extruded by the extruder A is located on the outer surface side of the interlayer film in the second and third layers, and the material extruded by the extruder B is located on the first layer side in the second and third layers.

(Example 10)

An interlayer film having a three-layer structure (second layer/first layer/third layer) (interlayer film having the shape shown in Fig. 2) was obtained in the same manner as in Example 9 except that the kinds of materials were changed as shown in Tables 4 to 6, the extrusion amount ratio of extruders was changed, and the pressure distribution at the time of joining the materials was adjusted. Also, using the obtained interlayer film, laminated glass was prepared in the same manner as in Example 1.

(Examples 11, 12)

An interlayer film having a three-layer structure (second layer/first layer/third layer) (interlayer film having the shape shown in Fig. 2) was obtained in the same manner as in Example 8 except that the kinds of materials were changed as shown in Tables 4 to 6, the extrusion amount ratio of extruders was changed, and the pressure distribution at the time of joining the materials was adjusted. Also, using the obtained interlayer film, laminated glass was prepared in the same manner as in Example 1.

(Comparative Example 3)

Materials shown in Tables 4 to 6 were co-extruded by using a co-extruder including an extruder A and an extruder B, and the extruded materials were joined with a die to prepare an interlayer film. The obtained interlayer film is an interlayer film having a three-layer structure (second layer/first layer/third layer) (interlayer film having the shape shown in Fig. 2). While Fig. 2 is a sectional view schematically showing an interlayer film for laminated glass corresponding to the present invention as described above, Fig. 2 was referenced so as to promote understanding of the sectional shape of the interlayer film of Comparative Example 3 that do not correspond to the present invention in the preceding text and Tables. In the obtained interlayer film, the second and third layers are formed from the material extruded by the extruder A and the first layer is formed from the material extruded by the extruder B.

(Example 13)

Preparation of interlayer film:

Ingredients were blended in blending amounts shown in Tables 4 to 6, and co-extruded by using a co-extruder including an extruder A, an extruder B, and an extruder C and the extruded materials are joined by a feed block (FB) to prepare an interlayer film. The obtained interlayer film is an interlayer film having a five-layer structure (second layer/fourth layer/first layer/fifth layer/third layer) (interlayer film having the shape shown in Fig. 3). The second and third layers are formed from the material extruded by the extruder A, the fourth and fifth layers are formed from the material extruded by the extruder C, and the first layer is formed from the material extruded by the extruder B.

Preparation of laminated glass:

Laminated glass was prepared with the obtained interlayer film in the same manner as in Example 1.

(Example 14)

An interlayer film having a five-layer structure (second layer/fourth layer/first layer/fifth layer/third layer) (interlayer film having the shape shown in Fig. 4) was obtained in the same manner as in Example 13 except that the kinds of materials were changed as shown in Tables 4 to 6, the extrusion amount was changed, and the pressure distribution at the time of joining the materials was adjusted. Also, using the obtained interlayer film, laminated glass was prepared in the same manner as in Example 1.

(Example 15)

An interlayer film having a five-layer structure (second layer/fourth layer/first layer/fifth layer/third layer) (interlayer film having the shape shown in Fig. 5) was obtained in the same manner as in Example 13 except that the kinds of materials were changed as shown in Tables 4 to 6, the extrusion amount was changed, and the pressure distribution at the time of joining the materials was adjusted. Also, using the obtained interlayer film, laminated glass was prepared in the same manner as in Example 1.

(Example 16)

An interlayer film having a five-layer structure (second layer/fourth layer/first layer/fifth layer/third layer) (interlayer film having the shape shown in Fig. 6) was obtained in the same manner as in Example 13 except that the kinds of materials were changed as shown in Tables 4 to 6, the extrusion amount was changed, and the pressure distribution at the time of joining the materials was adjusted. Also, using the obtained interlayer film, laminated glass was prepared in the same manner as in Example 1.

(Comparative Example 4)

Materials shown in Tables 4 to 6 were co-extruded by using a co-extruder including an extruder A and an extruder B, and the extruded materials are joined with a feed block (FB) to prepare an interlayer film. The obtained interlayer film is an interlayer film having a five-layer structure (second layer/fourth layer/first layer/fifth layer/third layer) (interlayer film having the shape shown in Fig. 3). While Fig. 3 is a sectional view schematically showing an interlayer film for laminated glass corresponding to the present invention as described above, Fig. 3 was referenced so as to promote understanding of the sectional shape of the interlayer film of Comparative Example 4 that do not correspond to the present invention in the preceding text and Tables. In the obtained interlayer film, the first, second and third layers are formed from the material extruded by the extruder A and the fourth and fifth layers are formed from the material extruded by the extruder B.

(Evaluation)

(1) Measurement of thickness of interlayer film

Thickness of the interlayer film was measured with a contact-type thickness meter ("TOF-4R" available from Yamabun Electronics Co., Ltd.) by the method described above.

(2) Measurement of wedge angle ($\theta$) and partial wedge angle of interlayer film

From the obtained thickness profile of the interlayer film, a wedge angle ($\theta$) of the interlayer film as a whole, and a partial wedge angle in a length of 400 mm in the direction connecting the one end and the other end of the interlayer film were calculated.

(3) Glass transition point of each layer of interlayer film

The glass transition point of each layer of the interlayer film was measured in the method described above.

(4) Measurement of solar transmittance

Using a spectrophotometer ("U-4100" available from Hitachi High-Tech Corporation), solar transmittance at a wavelength of 300 nm to 2500 nm of the obtained laminated glass (laminated glass A) was measured according to the above-described method. From the obtained solar transmittance, whether the relational formula of the formula (1) was satisfied or not was confirmed. The position (1) and the position (2) selected for calculating the formula (1) were, respectively, the maximum thickness position (X1) and the minimum thickness position (X2) of the interlayer film within a region of 0.1X to 0.9X from the one end toward the other end of the interlayer film.

(5) Measurement of visible light transmittance

Using a spectrophotometer ("U-4150" available from Hitachi High-Tech Corporation), visible light transmittance at a wavelength of 380 nm to 780 nm of the obtained laminated glass (laminated glass A) was measured according to the above-described method.

(6) Unevenness in heat shielding performance of laminated glass

ΔTts was calculated on the basis of the formula (1-1A) from the solar transmittance (Tts1) of the laminated glass (laminated glass A) at the maximum thickness position (X1) of the interlayer film, and the solar transmittance (Tts2) of the laminated glass (laminated glass A) at the minimum thickness position (X2) of the interlayer film. Also, Z was calculated by the following formula.
$$Z = |\Delta Tts/Tts2| \times 100$$

Unevenness in heat shielding performance of laminated glass was evaluated according to the following criteria.

[Criteria for judgement in unevenness in heat shielding performance of laminated glass]

A: Z is less than 2.
B: Z is 2 or more and less than 5.
C: Z is 5 or more and less than 8.
D: Z is 8 or more.

(7) Double images

Using a HUD evaluation device with which a virtual image is displayed 3 m away from the eyes of an observer through the laminated glass, double images of the laminated glass (laminated glass A) were evaluated. Specifically, by comparing the appearance of double images between the laminated glass, and the laminated glass for comparison, double images were evaluated according to the following criteria. The sectional shape of the interlayer film in the laminated glass for comparison, was adjusted to the same sectional shape as that of the interlayer film in the laminated glass A. Also, the interlayer film in the laminated glass for comparison does not contain a heat shielding agent and a coloring agent, and the laminated glass for comparison has a visible light transmittance Tv of 87% or more. Double images were evaluated by the number of examiners who determined that double images were ameliorated in the obtained laminated glass (laminated glass A) compared with the laminated glass for comparison, in twenty examiners.

[Criteria for judgment in double images]

A: In the twenty examiners, fifteen or more examiners determined that double images were suppressed compared with the laminated glass for comparison.
B: In the twenty examiners, ten or more and fourteen or less examiners determined that double images were suppressed compared with the laminated glass for comparison.
C: In the twenty examiners, one or more and nine or less examiners determined that double images were suppressed compared with the laminated glass for comparison.

Configurations of interlayer films and results are shown in the following Tables 7 to 13.

[Table 7]

| | | | Comparative Example 1 | Example 1 | Comparative Example 2 |
|---|---|---|---|---|---|
| Sectional shape of interlayer film | | | Fig. 1 | Fig. 1 | Fig. 1 |
| Method for producing interlayer film | | | FB | FB | FB |
| Distance (X) between one end and other end of interlayer film | | mm | 1250 | 1250 | 1250 |
| Maximum value of partial wedge angle of interlayer film (length 400 mm) | | mrad | 0.3 | 0.3 | 0.5 |
| Wedge angle of interlayer film as a whole (θ) | | mrad | 0.3 | 0.3 | 0.5 |
| Thickness of interlayer film at minimum thickness position (X2) (Tmin) | | μm | 760 | 760 | 760 |
| Coordinate of minimum thickness position (X2) | | - | 0.1X | 0.1X | 0.1X |
| Thickness of interlayer film at maximum thickness position (X1) (Tmax) | | μm | 1060 | 1060 | 1260 |
| Coordinate of maximum thickness position (X1) | | - | 0.9X | 0.9X | 0.9X |
| Difference in thickness (Tmax - Tmin) | | mm | 0.30 | 0.30 | 0.50 |
| Number of layers having glass transition point of less than 15°C | | - | 0 | 0 | 0 |
| Concentration of heat shielding substance at maximum thickness position (X1) | Maximum concentration of heat shielding substance | % by weight | 0.150 | 0.190 | 0.200 |
| | Glass transition point of layer where maximum concentration of heat shielding substance exists | °C | 27 | 27 | 27 |
| | Minimum concentration of heat shielding substance | % by weight | - | 0.00 | - |
| | Glass transition point of layer where minimum concentration of heat shielding substance exists | °C | - | 27 | - |
| Position where Tv of laminated glass A shows minimum value within region of 0.1X to 0.9X from one end toward other end of interlayer film | Coordinate | - | 0.9X | 0.1X | 0.9X |
| | Thickness of interlayer film | μm | 1060 | 760 | 1060 |
| | Tv | % | 65.1 | 71.0 | 68.2 |
| | Tts | % | 48.3 | 52.5 | 50.3 |

(continued)

|  |  |  | Comparative Example 1 | Example 1 | Comparative Example 2 |
|---|---|---|---|---|---|
| Position where Tv of laminated glass A shows maximum value within region of 0.1X to 0.9X from one end toward other end of interlayer film | Coordinate | - | 0.1X | 0.9X | 0.1X |
|  | Thickness of interlayer film | μm | 760 | 1060 | 760 |
|  | Tv | % | 71.0 | 72.3 | 75.6 |
|  | Tts | % | 52.5 | 53.5 | 56.4 |
| Tv2 of laminated glass A at minimum thickness position (X2) |  | % | 71.0 | 71.0 | 75.6 |
| Tv1 of laminated glass A at maximum thickness position (X1) |  | % | 64.8 | 72.3 | 68.2 |
| Tts2 of laminated glass A at minimum thickness position (X2) |  | % | 52.5 | 52.5 | 56.4 |
| Tts1 of laminated glass A at maximum thickness position (X1) |  | % | 48.2 | 53.5 | 50.2 |
| ΔTts(= Tts2 - Tts1) | Left-hand side of formula (1) | % | 4.3 | -1.0 | 6.2 |
| ΔTts_ideal | Right-hand side of formula (1) | % | 4.2 | 4.2 | 6.1 |
| Unevenness in heat shielding performance of laminated glass |  | - | D | A | D |
| Double images |  | - | - | A | - |

[Table 8]

|  |  | Example 2 | Example 3 | Example 4 |
|---|---|---|---|---|
| Sectional shape of interlayer film |  | Fig. 1 | Fig. 1 | Fig. 1 |
| Method for producing interlayer film |  | FB | FB | FB |
| Distance (X) between one end and other end of interlayer film | mm | 1250 | 1250 | 1250 |
| Maximum value of partial wedge angle of interlayer film (length 400 mm) | mrad | 0.5 | 0.5 | 0.5 |
| Wedge angle of interlayer film as a whole (θ) | mrad | 0.5 | 0.5 | 0.5 |
| Thickness of interlayer film at minimum thickness position (X2) (Tmin) | μm | 760 | 760 | 760 |
| Coordinate of minimum thickness position (X2) | - | 0.1X | 0.1X | 0.1X |
| Thickness of interlayer film at maximum thickness position (X1) (Tmax) | μm | 1260 | 1260 | 1260 |
| Coordinate of maximum thickness position (X1) | - | 0.9X | 0.9X | 0.9X |
| Difference in thickness (Tmax - Tmin) | mm | 0.50 | 0.50 | 0.50 |
| Number of layers having glass transition point of less than 15°C | - | 0 | 0 | 0 |

(continued)

|  |  |  | Example 2 | Example 3 | Example 4 |
|---|---|---|---|---|---|
| Concentration of heat shielding substance at maximum thickness position (X1) | Maximum concentration of heat shielding substance | % by weight | 0.254 | 0.510 | 0.278 |
|  | Glass transition point of layer where maximum concentration of heat shielding substance exists | °C | 27 | 27 | 27 |
|  | Minimum concentration of heat shielding substance | % by weight | 0.00 | 0.00 | 0.00 |
|  | Glass transition point of layer where minimum concentration of heat shielding substance exists | °C | 27 | 27 | 27 |
| Position where Tv of laminated glass A shows minimum value within region of 0.1X to 0.9X from one end toward other end of interlayer film | Coordinate | - | 0.9X | 0.1X | 0.7X |
|  | Thickness of interlayer film | μm | 1260 | 760 | 1110 |
|  | Tv | % | 74.6 | 75.6 | 73.4 |
|  | Tts | % | 55.4 | 56.3 | 54.3 |
| Position where Tv of laminated glass A shows maximum value within region of 0.1X to 0.9X from one end toward other end of interlayer film | Coordinate | - | 0.1X | 0.9X | 0.1X |
|  | Thickness of interlayer film | μm | 760 | 1260 | 760 |
|  | Tv | % | 75.6 | 78.0 | 75.6 |
|  | Tts | % | 56.4 | 59.0 | 56.3 |
| Tv2 of laminated glass A at minimum thickness position (X2) |  | % | 75.6 | 75.6 | 75.6 |
| Tv1 of laminated glass A at maximum thickness position (X1) |  | % | 74.6 | 78.0 | 74.5 |
| Tts2 of laminated glass A at minimum thickness position (X2) |  | % | 56.4 | 56.3 | 56.3 |
| Tts1 of laminated glass A at maximum thickness position (X1) |  | % | 55.4 | 59.0 | 55.3 |
| ΔTts(= Tts2 - Tts1) | Left-hand side of formula (1) | % | 1.0 | -2.7 | 1.0 |
| ΔTts_ideal | Right-hand side of formula (1) | % | 6.1 | 6.1 | 6.1 |
| Unevenness in heat shielding performance of laminated glass |  | - | A | B | A |
| Double images |  | - | A | A | A |

[Table 9]

| | | | Example 5 | Example 6 | Example 7 |
|---|---|---|---|---|---|
| Sectional shape of interlayer film | | | Fig. 1 | Fig. 1 | Fig. 1 |
| Method for producing interlayer film | | | FB | FB | FB |
| Distance (X) between one end and other end of interlayer film | | mm | 1250 | 1250 | 1250 |
| Maximum value of partial wedge angle of interlayer film (length 400 mm) | | mrad | 0.5 | 0.5 | 0.5 |
| Wedge angle of interlayer film as a whole ($\theta$) | | mrad | 0.5 | 0.5 | 0.5 |
| Thickness of interlayer film at minimum thickness position (X2) (Tmin) | | $\mu$m | 760 | 760 | 760 |
| Coordinate of minimum thickness position (X2) | | - | 0.1X | 0.1X | 0.1X |
| Thickness of interlayer film at maximum thickness position (X1) (Tmax) | | $\mu$m | 1260 | 1260 | 1260 |
| Coordinate of maximum thickness position (X1) | | - | 0.9X | 0.9X | 0.9X |
| Difference in thickness (Tmax - Tmin) | | mm | 0.50 | 0.50 | 0.50 |
| Number of layers having glass transition point of less than 15°C | | - | 0 | 0 | 0 |
| Concentration of heat shielding substance at maximum thickness position (X1) | Maximum concentration of heat shielding substance | % by weight | 0.278 | 0.295 | 0.380 |
| | Glass transition point of layer where maximum concentration of heat shielding substance exists | °C | 27 | 27 | 27 |
| | Minimum concentration of heat shielding substance | % by weight | 0.00 | 0.02 | 0.00 |
| | Glass transition point of layer where minimum concentration of heat shielding substance exists | °C | 27 | 27 | 27 |
| Position where Tv of laminated glass A shows minimum value within region of 0.1X to 0.9X from one end toward other end of interlayer film | Coordinate | - | 0.6X | 0. 4X | 0.3X |
| | Thickness of interlayer film | $\mu$m | 1060 | 960 | 910 |
| | Tv | % | 73.4 | 71.4 | 74.8 |
| | Tts | % | 54.3 | 52.0 | 55.5 |

(continued)

| | | | Example 5 | Example 6 | Example 7 |
|---|---|---|---|---|---|
| Position where Tv of laminated glass A shows maximum value within region of 0.1X to 0.9X from one end toward other end of interlayer film | Coordinate | - | 0.9X | 0.1X | 0.9X |
| | Thickness of interlayer film | $\mu$m | 1260 | 760 | 1260 |
| | Tv | % | 77.8 | 75.3 | 78.7 |
| | Tts | % | 58.7 | 56.3 | 59.8 |
| Tv2 of laminated glass A at minimum thickness position (X2) | | % | 75.6 | 75.3 | 75.6 |
| Tv1 of laminated glass A at maximum thickness position (X1) | | % | 77.8 | 72.0 | 78.7 |
| Tts2 of laminated glass A at minimum thickness position (X2) | | % | 56.3 | 56.3 | 56.4 |
| Tts1 of laminated glass A at maximum thickness position (X1) | | % | 58.7 | 53.0 | 59.8 |
| $\Delta$Tts(= Tts2 - Tts1) | Left-hand side of formula (1) | % | -2.4 | 3.3 | -3.4 |
| $\Delta$Tts_ideal | Right-hand side of formula (1) | % | 6.1 | 6.1 | 6.1 |
| Unevenness in heat shielding performance of laminated glass | | - | B | C | C |
| Double images | | - | A | A | A |

[Table 10]

| | | Comparative Example 3 | Example 8 | Example 9 |
|---|---|---|---|---|
| Sectional shape of interlayer film | | Fig. 2 | Fig. 2 | Fig. 2 |
| Method for producing interlayer film | | Die | Die | FB |
| Distance (X) between one end and other end of interlayer film | mm | 1250 | 1250 | 1250 |
| Maximum value of partial wedge angle of interlayer film (length 400 mm) | mrad | 0.8 | 0.8 | 0.8 |
| Wedge angle of interlayer film as a whole ($\theta$) | mrad | 0.8 | 0.8 | 0.8 |
| Thickness of interlayer film at minimum thickness position (X2) (Tmin) | $\mu$m | 760 | 760 | 760 |
| Coordinate of minimum thickness position (X2) | - | 0.1X | 0.1X | 0.1X |
| Thickness of interlayer film at maximum thickness position (X1) (Tmax) | $\mu$m | 1400 | 1400 | 1400 |
| Coordinate of maximum thickness position (X1) | - | 0.9X | 0.9X | 0.9X |
| Difference in thickness (Tmax - Tmin) | mm | 0.64 | 0.64 | 0.64 |
| Number of layers having glass transition point of less than 15°C | - | 1 | 1 | 1 |

(continued)

|  |  |  | Comparative Example 3 | Example 8 | Example 9 |
|---|---|---|---|---|---|
| Concentration of heat shielding substance at maximum thickness position (X1) | Maximum concentration of heat shielding substance | % by weight | 0.900 | 2.750 | 1.730 |
|  | Glass transition point of layer where maximum concentration of heat shielding substance exists | °C | 27 | 27 | 27 |
|  | Minimum concentration of heat shielding substance | % by weight | 0.00 | 0.00 | 0.00 |
|  | Glass transition point of layer where minimum concentration of heat shielding substance exists | °C | -4 | -4, 27 | -4, 27 |
| Position where Tv of laminated glass A shows minimum value within region of 0.1X to 0.9X from one end toward other end of interlayer film | Coordinate | - | 0.9X | 0.9X | 0.1X |
|  | Thickness of interlayer film | μm | 1400 | 1400 | 760 |
|  | Tv | % | 75.2 | 79.6 | 81.0 |
|  | Tts | % | 57.0 | 62.2 | 63.6 |
| Position where Tv of laminated glass A shows maximum value within region of 0.1X to 0.9X from one end toward other end of interlayer film | Coordinate | - | 0.1X | 0.1X | 0.9X |
|  | Thickness of interlayer film | μm | 760 | 760 | 1400 |
|  | Tv | % | 81.0 | 81.0 | 81.3 |
|  | Tts | % | 63.7 | 63.7 | 64.0 |
| Tv2 of laminated glass A at minimum thickness position (X2) | | % | 81.0 | 81.0 | 81.0 |
| Tv1 of laminated glass A at maximum thickness position (X1) | | % | 75.2 | 79.6 | 81.3 |
| Tts2 of laminated glass A at minimum thickness position (X2) | | % | 63.7 | 63.7 | 63.6 |
| Tts1 of laminated glass A at maximum thickness position (X1) | | % | 57.0 | 62.2 | 64.0 |
| ΔTts(= Tts2 - Tts1) | Left-hand side of formula (1) | % | 6.7 | 1.5 | -0.4 |
| ΔTts_ideal | Right-hand side of formula (1) | % | 6.4 | 6.4 | 6.4 |
| Unevenness in heat shielding performance of laminated glass | | - | D | B | A |
| Double images | | - | - | B | B |

[Table 11]

| | | | Example 10 | Example 11 | Example 12 |
|---|---|---|---|---|---|
| Sectional shape of interlayer film | | | Fig. 2 | Fig. 2 | Fig. 2 |
| Method for producing interlayer film | | | FB | Die | Die |
| Distance (X) between one end and other end of interlayer film | | mm | 1250 | 1250 | 1250 |
| Maximum value of partial wedge angle of interlayer film (length 400 mm) | | mrad | 0.8 | 0.8 | 0.8 |
| Wedge angle of interlayer film as a whole (θ) | | mrad | 0.8 | 0.8 | 0.8 |
| Thickness of interlayer film at minimum thickness position (X2) (Tmin) | | μm | 760 | 760 | 760 |
| Coordinate of minimum thickness position (X2) | | - | 0.1X | 0.1X | 0.1X |
| Thickness of interlayer film at maximum thickness position (X1) (Tmax) | | μm | 1400 | 1400 | 1400 |
| Coordinate of maximum thickness position (X1) | | - | 0.9X | 0.9X | 0.9X |
| Difference in thickness (Tmax - Tmin) | | mm | 0.64 | 0.64 | 0.64 |
| Number of layers having glass transition point of less than 15°C | | - | 1 | 1 | 1 |
| Concentration of heat shielding substance at maximum thickness position (X1) | Maximum concentration of heat shielding substance | % by weight | 1.370 | 1.060 | 0.780 |
| | Glass transition point of layer where maximum concentration of heat shielding substance exists | °C | 27 | 27 | 27 |
| | Minimum concentration of heat shielding substance | % by weight | 0.00 | 0.00 | 0.00 |
| | Glass transition point of layer where minimum concentration of heat shielding substance exists | °C | -4, 27 | -4, 27 | 27 |
| Position where Tv of laminated glass A shows minimum value within region of 0.1X to 0.9X from one end toward other end of interlayer film | Coordinate | - | 0.5X | 0.5X | 0.1X |
| | Thickness of interlayer film | μm | 1160 | 1160 | 760 |
| | Tv | % | 79.6 | 80.4 | 81.0 |
| | Tts | % | 62.2 | 63.0 | 63.6 |

(continued)

|  |  |  | Example 10 | Example 11 | Example 12 |
|---|---|---|---|---|---|
| Position where Tv of laminated glass A shows maximum value within region of 0.1X to 0.9X from one end toward other end of interlayer film | Coordinate | - | 0.1X | 0.9X | 0.9X |
|  | Thickness of interlayer film | μm | 760 | 1400 | 1400 |
|  | Tv | % | 81.0 | 81.6 | 79.8 |
|  | Tts | % | 63.7 | 64.3 | 62.4 |
| Tv2 of laminated glass A at minimum thickness position (X2) |  | % | 81.0 | 81.0 | 81.0 |
| Tv1 of laminated glass A at maximum thickness position (X1) |  | % | 80.3 | 81.6 | 79.8 |
| Tts2 of laminated glass A at minimum thickness position (X2) |  | % | 63.7 | 63.6 | 63.6 |
| Tts1 of laminated glass A at maximum thickness position (X1) |  | % | 62.9 | 64.3 | 62.4 |
| ΔTts(= Tts2 - Tts1) | Left-hand side of formula (1) | % | 0.8 | -0.7 | 1.2 |
| ΔTts_ideal | Right-hand side of formula (1) | % | 6.4 | 6.4 | 6.4 |
| Unevenness in heat shielding performance of laminated glass |  | - | A | A | A |
| Double images |  | - | A | B | B |

[Table 12]

|  |  | Comparative Example 4 | Example 13 |
|---|---|---|---|
| Sectional shape of interlayer film |  | Fig. 3 | Fig. 3 |
| Method for producing interlayer film |  | FB | FB |
| Distance (X) between one end and other end of interlayer film | mm | 1250 | 1250 |
| Maximum value of partial wedge angle of interlayer film (length 400 mm) | mrad | 0. 9 | 0. 9 |
| Wedge angle of interlayer film as a whole (θ) | mrad | 0. 9 | 0. 9 |
| Thickness of interlayer film at minimum thickness position (X2) (Tmin) | μm | 760 | 760 |
| Coordinate of minimum thickness position (X2) | - | 0.1X | 0.1X |
| Thickness of interlayer film at maximum thickness position (X1) (Tmax) | μm | 1480 | 1480 |
| Coordinate of maximum thickness position (X1) | - | 0.9X | 0.9X |
| Difference in thickness (Tmax - Tmin) | mm | 0.72 | 0.72 |
| Number of layers having glass transition point of less than 15°C | - | 2 | 2 |

(continued)

|  |  |  | Comparative Example 4 | Example 13 |
|---|---|---|---|---|
| Concentration of heat shielding substance at maximum thickness position (X1) | Maximum concentration of heat shielding substance | % by weight | 0.412 | 0.453 |
|  | Glass transition point of layer where maximum concentration of heat shielding substance exists | °C | 27 | 27 |
|  | Minimum concentration of heat shielding substance | % by weight | 0.00 | 0.00 |
|  | Glass transition point of layer where minimum concentration of heat shielding substance exists | °C | -4, 27 | -4, 27 |
| Position where Tv of laminated glass A shows minimum value within region of 0.1X to 0.9X from one end toward other end of interlayer film | Coordinate | - | 0.9X | 0.9X |
|  | Thickness of interlayer film | μm | 1480 | 1480 |
|  | Tv | % | 78.6 | 83.2 |
|  | Tts | % | 59.3 | 65.6 |
| Position where Tv of laminated glass A shows maximum value within region of 0.1X to 0.9X from one end toward other end of interlayer film | Coordinate | - | 0.1X | 0.1X |
|  | Thickness of interlayer film | μm | 760 | 760.0 |
|  | Tv | % | 83.6 | 83.6 |
|  | Tts | % | 66.1 | 66.1 |
| Tv2 of laminated glass A at minimum thickness position (X2) |  | % | 83.6 | 83.6 |
| Tv1 of laminated glass A at maximum thickness position (X1) |  | % | 78.6 | 83.2 |
| Tts2 of laminated glass A at minimum thickness position (X2) |  | % | 66.1 | 66.1 |
| Tts1 of laminated glass A at maximum thickness position (X1) |  | % | 59.3 | 65.6 |
| ΔTts(= Tts2 - Tts1) | Left-hand side of formula (1) | % | 6.8 | 0.5 |
| ΔTts_ideal | Right-hand side of formula (1) | % | 6.6 | 6.6 |
| Unevenness in heat shielding performance of laminated glass |  | - | D | A |
| Double images |  | - | - | C |

[Table 13]

| | | | Example 14 | Example 15 | Example 16 |
|---|---|---|---|---|---|
| Sectional shape of interlayer film | | | Fig. 4 | Fig. 5 | Fig. 6 |
| Method for producing interlayer film | | | FB | FB | FB |
| Distance (X) between one end and other end of interlayer film | | mm | 1250 | 1250 | 1250 |
| Maximum value of partial wedge angle of interlayer film (length 400 mm) | | mrad | 0. 9 | 0.9 | 0.9 |
| Wedge angle of interlayer film as a whole ($\theta$) | | mrad | 0. 9 | 0.9 | 0. 9 |
| Thickness of interlayer film at minimum thickness position (X2) (Tmin) | | $\mu$m | 760 | 760 | 760 |
| Coordinate of minimum thickness position (X2) | | - | 0.1X | 0.1X | 0.1X |
| Thickness of interlayer film at maximum thickness position (X1) (Tmax) | | $\mu$m | 1480 | 1480 | 1480 |
| Coordinate of maximum thickness position (X1) | | - | 0.9X | 0.9X | 0.9X |
| Difference in thickness (Tmax - Tmin) | | mm | 0.72 | 0.72 | 0.72 |
| Number of layers having glass transition point of less than 15°C | | - | 2 | 2 | 2 |
| Concentration of heat shielding substance at maximum thickness position (X1) | Maximum concentration of heat shielding substance | % by weight | 0.453 | 0.604 | 0.544 |
| | Glass transition point of layer where maximum concentration of heat shielding substance exists | °C | 27 | 27 | 27 |
| | Minimum concentration of heat shielding substance | % by weight | 0.00 | 0.00 | 0.00 |
| | Glass transition point of layer where minimum concentration of heat shielding substance exists | °C | -4, 27 | -4, 27 | -4, 27 |
| Position where Tv of laminated glass A shows minimum value within region of 0.1X to 0.9X from one end toward other end of interlayer film | Coordinate | - | 0.1X | 0. 4X | 0. 4X |
| | Thickness of interlayer film | $\mu$m | 760 | 1115 | 1115 |
| | Tv | % | 83.6 | 82.0 | 82.6 |
| | Tts | % | 66.1 | 63.6 | 64.5 |

(continued)

| | | | Example 14 | Example 15 | Example 16 |
|---|---|---|---|---|---|
| Position where Tv of laminated glass A shows maximum value within region of 0.1X to 0.9X from one end toward other end of interlayer film | Coordinate | - | 0.9X | 0.lX | 0.9X |
| | Thickness of interlayer film | μm | 1480 | 760.0 | 1480 |
| | Tv | % | 84.4 | 83.6 | 84.0 |
| | Tts | % | 67.5 | 66.1 | 66.9 |
| Tv2 of laminated glass A at minimum thickness position (X2) | | % | 83.6 | 83.6 | 83.6 |
| Tv1 of laminated glass A at maximum thickness position (X1) | | % | 84.4 | 82.7 | 84.0 |
| Tts2 of laminated glass A at minimum thickness position (X2) | | % | 66.1 | 66.1 | 66.1 |
| Tts1 of laminated glass A at maximum thickness position (X1) | | % | 67.5 | 64.7 | 66.9 |
| ΔTts(= Tts2 - Tts1) | Left-hand side of formula (1) | % | -1.4 | 1.4 | -0.8 |
| ΔTts_ideal | Right-hand side of formula (1) | % | 6.6 | 6.6 | 6.6 |
| Unevenness in heat shielding performance of laminated glass | | - | B | B | A |
| Double images | | - | C | B | B |

**EXPLANATION OF SYMBOLS**

1, 1A, 1B, 1C, 1D, 1E: First layer
2A, 2B, 2C, 2D, 2E: Second layer
3A, 3B, 3C, 3D, 3E: Third layer
4B, 4C, 4D, 4E: Fourth layer
5B, 5C, 5D, 5E: Fifth layer
11, 11A, 11B, 11C, 11D, 11E: Interlayer film
11a: One end
11b: Other end

**Claims**

1. An interlayer film for laminated glass having one end and the other end,

the interlayer film having a region having a partial wedge angle of 0.05 mrad or more in a length of 400 mm in a direction connecting the one end and the other end,
the interlayer film including a heat shielding layer containing a heat shielding substance and, the layer having a glass transition point of 15°C or more,
the interlayer film having a part satisfying a formula (1) below and having Tts2 of 79% or less
when a distance between the one end and the other end of the interlayer film is referred to as X,
a thickness of the interlayer film at an arbitrary position (1) of the interlayer film within a region of 0.1X to 0.9X from the one end toward the other end is referred to as T1 mm,
a thickness of the interlayer film at a position (2) where the thickness of the interlayer film is smaller than the thickness of the interlayer film at the position (1) within a region of 0.1X to 0.9X from the one end toward the other end by 25 μm or more is referred to as T2 mm, and
in a laminated glass A obtained by sandwiching the interlayer film between two sheets of clear glass, a solar transmittance of the laminated glass A at the position (1) is referred to as Tts1%, and a solar transmittance of the laminated glass A at the position (2) is referred to as Tts2%:
[Numerical formula 1]

$$\Delta Tts < Tts2 - (a \times ln(T1) + b) \quad\quad \cdots (1)$$

in the formula (1), ΔTts, a and b being, respectively, values indicated by a formula (1-1A), a formula (1-1B) and a formula (1-1C) below, in the formula (1-1B) and the formula (1-1C), A, B and C being, respectively, values indicated by a formula (1-D), a formula (1-E) and a formula (1-F) below:

[Numerical formula 2]

$$\Delta Tts = Tts2 - Tts1 \quad\quad \cdots (1-1A)$$

$$a = \frac{-(B + ln(T2)) + \sqrt{(B + ln(T2))^2 - 4A(C - Tts2)}}{2A} \quad\quad \cdots (1-1B)$$

$$b = Aa^2 + Ba + C \quad\quad \cdots (1-1C)$$

$$A = -0.2921 \quad\quad \cdots (1-1D)$$

$$B = -1.4431 \quad\quad \cdots (1-1E)$$

$$C = 78.013 \quad\quad \cdots (1-1F)$$

2. The interlayer film for laminated glass according to claim 1, wherein

the position (1) is a maximum thickness position (X1) of the interlayer film within a region of 0.1X to 0.9X from the one end toward the other end, and
the position (2) is a minimum thickness position (X2) of the interlayer film within a region of 0.1X to 0.9X from the one end toward the other end.

3. The interlayer film for laminated glass according to claim 1 or 2, that satisfies a formula (2) below:
[Numerical formula 3]

$$\Delta Tts < K \times (Tts2 - (a \times ln(T1) + b)) \quad\quad \cdots (2)$$

in the formula (2), ΔTts, a, and b being, respectively, values indicated by the formula (1-1A), the formula (1-1B) and the formula (1-1C), K being 0.95.

4. The interlayer film for laminated glass according to any one of claims 1 to 3, that satisfies ΔTts > 0 in the formula (1).

5. The interlayer film for laminated glass according to any one of claims 1 to 4, that satisfies a formula (3) below:
[Numerical formula 4]

$$|\Delta Tts| < K \times |Tts2 - (a \times ln(T1) + b)| \quad\quad \cdots (3)$$

in the formula (3), $\Delta$Tts, a, and b being, respectively, values indicated by the formula (1-1A), the formula (1-1B) and the formula (1-1C), K being 0.95.

6. The interlayer film for laminated glass according to any one of claims 1 to 5, wherein a maximum value of the solar transmittance of the laminated glass A within a region of 0.1X to 0.9X from the one end toward the other end is 76% or less.

7. The interlayer film for laminated glass according to any one of claims 1 to 6, wherein a position where the solar transmittance of the laminated glass A shows a maximum value within a region of 0.1X to 0.9X from the one end toward the other end is different from the position (1) and is different from the position (2).

8. The interlayer film for laminated glass according to any one of claims 1 to 6, wherein a position where the solar transmittance of the laminated glass A shows a maximum value within a region of 0.1X to 0.9X from the one end toward the other end is the position (1) or the position (2).

9. The interlayer film for laminated glass according to any one of claims 1 to 8, wherein a position where the solar transmittance of the laminated glass A shows a minimum value within a region of 0.1X to 0.9X from the one end toward the other end is different from the position (1) and is different from the position (2).

10. The interlayer film for laminated glass according to any one of claims 1 to 8, wherein a position where the solar transmittance of the laminated glass A shows a minimum value within a region of 0.1X to 0.9X from the one end toward the other end is the position (1) or the position (2).

11. The interlayer film for laminated glass according to any one of claims 1 to 10, wherein a maximum value of the visible light transmittance of the laminated glass A within a region of 0.1X to 0.9X from the one end toward the other end is 60% or more.

12. An interlayer film for laminated glass having one end and the other end,

the interlayer film having a region having a partial wedge angle of 0.05 mrad or more in a length of 400 mm in a direction connecting the one end and the other end,
the interlayer film including a heat shielding layer containing a heat shielding substance and the layer having a glass transition point of 15°C or more,
the heat shielding layer having a region where concentration of the heat shielding substance is 0.01% by weight or more in the thickness direction,
the heat shielding layer having an absolute value of difference between a concentration of the heat shielding substance in a region where the concentration of the heat shielding substance is highest and a concentration of the heat shielding substance in a region where the concentration of the heat shielding substance is lowest in the thickness direction of 0.01% by weight or more.

13. The interlayer film for laminated glass according to any one of claims 1 to 12, wherein when a distance from a first outer surface to a second outer surface of the interlayer film is referred to as t, the heat shielding substance exists in a region of 0t to 0.2t from the first outer surface toward the second outer surface.

14. The interlayer film for laminated glass according to any one of claims 1 to 13, wherein when a distance from a first outer surface to a second outer surface of the interlayer film is referred to as t, the heat shielding substance exists in a region of more than 0.2t to 0.4t from the first outer surface toward the second outer surface.

15. The interlayer film for laminated glass according to any one of claims 1 to 14, wherein when a distance from a first outer surface to a second outer surface of the interlayer film is referred to as t, the heat shielding substance exists in a region of more than 0.4t to 0.5t from the first outer surface toward the second outer surface.

16. The interlayer film for laminated glass according to any one of claims 1 to 15, wherein the interlayer film includes a layer having a glass transition point of less than 15°C.

17. The interlayer film for laminated glass according to any one of claims 1 to 16, wherein the interlayer film includes two or more layers having a glass transition point of less than 15°C.

18. The interlayer film for laminated glass according to claim 16 or 17, wherein the layer having a glass transition point of less than 15°C contains a heat shielding substance.

19. The interlayer film for laminated glass according to claim 18, wherein a content of the heat shielding substance in 100% by weight of the layer having a glass transition point of less than 15°C is 0.01% by weight or less.

20. The interlayer film for laminated glass according to any one of claims 1 to 19, wherein the interlayer film contains two or more kinds of heat shielding substances.

21. The interlayer film for laminated glass according to any one of claims 1 to 20, wherein

the interlayer film contains two or more kinds of heat shielding substances, and
in 100% by weight of the interlayer film, a content of each of two or more kinds of the heat shielding substances is 1.0% by weight or less.

22. The interlayer film for laminated glass according to any one of claims 1 to 21, wherein the interlayer film contains three or more kinds of heat shielding substances.

23. The interlayer film for laminated glass according to any one of claims 1 to 22, wherein concentration of the heat shielding substance in the heat shielding layer is 1.5% by weight or less in the thickness direction of the maximum thickness position of the interlayer film within a region of 0.1X to 0.9X from the one end toward the other end.

24. The interlayer film for laminated glass according to any one of claims 1 to 23, wherein the heat shielding substance contained in the interlayer film is a vanadium phthalocyanine compound, ITO particles, or CWO particles.

25. The interlayer film for laminated glass according to any one of claims 1 to 24, wherein the interlayer film as a whole has a wedge angle of 0.05 mrad or more.

26. The interlayer film for laminated glass according to any one of claims 1 to 25, wherein

the interlayer film includes a layer having a storage modulus at 20°C of 4 MPa or more,
the interlayer film has uneven surface given by an emboss roll method or a melt fracture method, the uneven surface has a ten-point average roughness of 1 $\mu$m or more and 100 $\mu$m or less, and
the interlayer film has a refractive index of 1.46 or more.

27. A laminated glass comprising:

a first lamination glass member;
a second lamination glass member; and
the interlayer film for laminated glass according to any one of claims 1 to 26,
the interlayer film for laminated glass being arranged between the first lamination glass member and the second lamination glass member.

28. The laminated glass according to claim 27, wherein

the first lamination glass member has a uniform thickness, and
the second lamination glass member has a uniform thickness.

29. A production method that fits either of 1) and 2) below:

1) A method for producing the interlayer film for laminated glass according to any one of claims 1 to 26; and
2) A method for producing a laminated glass according to claim 27 or 28.

[FIG. 1]

[FIG. 2]

[FIG. 3]

11B

1B  4B  2B

11a

5B  3B

11b

0. 1X

0. 1X

[FIG. 4]

11C

1C  4C  2C

11a

5C  3C

11b

0. 1X

0. 1X

[FIG. 5]

11D

1D  4D  2D

11a

5D  3D

11b

0. 1X        0. 1X

[FIG. 6]

11E

1E  4E  2E

11a

5E  3E

11b

0. 1X        0. 1X

[FIG. 7]

Clear film. $y = -2.155\ln(x) + 79.799$
Condition 3. $y = -9.096\ln(x) + 66.442$
Condition 2. $y = -10.84\ln(x) + 60.305$
Condition 1. $y = -12.18\ln(x) + 51.778$

| a | b |
|---|---|
| −12.18 | 51.778 |
| −10.84 | 60.305 |
| −9.096 | 66.442 |
| −2.155 | 79.799 |

$y = -0.2921x^2 - 1.4431x + 78.013$

## INTERNATIONAL SEARCH REPORT

| | International application No. |
|---|---|
| | **PCT/JP2023/015241** |

**A.     CLASSIFICATION OF SUBJECT MATTER**

*C03C 27/12*(2006.01)i; *B60J 1/02*(2006.01)i
FI:     C03C27/12 Z; B60J1/02 M

According to International Patent Classification (IPC) or to both national classification and IPC

**B.     FIELDS SEARCHED**

Minimum documentation searched (classification system followed by classification symbols)

C03C27/12; B32B17/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2016/052421 A1 (SEKISUI CHEMICAL CO., LTD.) 07 April 2016 (2016-04-07) claims, paragraphs [0051]-[0052], [0095]-[0117], examples | 1-29 |
| A | WO 2019/189736 A1 (SEKISUI CHEMICAL CO., LTD.) 03 October 2019 (2019-10-03) claims, paragraphs [0031], [0034] | 1-29 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/015241**

| Patent document cited in search report | | | Publication date (day/month/year) | Patent family member(s) | | | Publication date (day/month/year) |
|---|---|---|---|---|---|---|---|
| WO | 2016/052421 | A1 | 07 April 2016 | EP 3202733 A1 claims, paragraphs [0051]-[0052], [0094]-[0116], examples | | | |
| | | | | US | 2017/0274631 | A1 | |
| | | | | CN | 107074648 | A | |
| | | | | KR 10-2017-0063504 | | A | |
| WO | 2019/189736 | A1 | 03 October 2019 | EP 3778516 A1 claims, paragraphs [0031], [0034] | | | |
| | | | | US | 2020/0406587 | A1 | |
| | | | | CN | 111918853 | A | |
| | | | | KR 10-2020-0138721 | | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018081570 A1

**Non-patent literature cited in the description**

- *CHEMICAL ABSTRACTS*, 79869-59-3
- *CHEMICAL ABSTRACTS*, 6358-69-6
- *CHEMICAL ABSTRACTS*, 12671-74-8
- *CHEMICAL ABSTRACTS*, 12270-011
- *CHEMICAL ABSTRACTS*, 8910-94-5
- *CHEMICAL ABSTRACTS*, 71902-17-5
- *CHEMICAL ABSTRACTS*, 13676091-0
- *CHEMICAL ABSTRACTS*, 15958-69-6
- *CHEMICAL ABSTRACTS*, 12236-11-2
- *CHEMICAL ABSTRACTS*, 81-48-1
- *CHEMICAL ABSTRACTS*, 6408-72-6
- *CHEMICAL ABSTRACTS*, 61969-44-6
- *CHEMICAL ABSTRACTS*, 37229-235
- *CHEMICAL ABSTRACTS*, 116-75-6
- *CHEMICAL ABSTRACTS*, 104491-84-1
- *CHEMICAL ABSTRACTS*, 3321-10-4
- *CHEMICAL ABSTRACTS*, 70956-30-8
- *CHEMICAL ABSTRACTS*, 88650-91-3